# EUROPÄISCHE PATENTSCHRIFT

(11) **EP 3 724 601 B1**
(45) Veröffentlichungstag und Bekanntmachung des Hinweises auf die Patenterteilung: **24.01.2024**
(21) Anmeldenummer: 18825923.8
(22) Anmeldetag: 11.12.2018
(51) Int. Cl.: B64F 1/36, G01B 11/02, G01C 3/08, G02B 7/38, G03B 13/36, H04N 23/959

(54) **ABSTANDSERMITTLUNG BASIEREND AUF VERSCHIEDENEN TIEFENSCHÄRFEBEREICHEN BEI UNTERSCHIEDLICHEN FOKUSEINSTELLUNGEN EINES OBJEKTIVS**
DISTANCE DETERMINATION BASED ON DIFFERENT DEPTH OF FIELD AREAS WITH DIFFERENT FOCUS SETTINGS OF AN OBJECTIVE LENS
DÉTERMINATION DE LA DISTANCE BASÉE SUR DIFFÉRENTES PROFONDEURS DE CHAMP AVEC DIFFÉRENTS RÉGLAGES DE MISE AU POINT D'UNE LENTILLE D'OBJECTIF

(30) Priorität: 12.12.2017 DE 102017129627
(43) Veröffentlichungstag der Anmeldung: 21.10.2020
(73) Patentinhaber: brainchain AG, 8616 Riedikon (CH)
(72) Erfinder: HUNZIKER, Urs, 8706 Meilen (CH)
(74) Vertreter: Dilg, Haeusler, Schindelmann Patentanwaltsgesellschaft mbH
(86) Internationale Anmeldenummer: PCT/EP2018/084423
(87) Internationale Veröffentlichungsnummer: WO 2019/115560

(56) Entgegenhaltungen:
- WO-A1-2013/069279
- SUBBARAO M: "Parallel Depth Recovery By Changing Camera Parameters", COMPUTER VISION., SECOND INTERNATIONAL CONFERENCE ON, IEEE, 5. Dezember 1988 (1988-12-05), Seiten 149-155, XP032286257, DOI: 10.1109/CCV.1988.589986 ISBN: 978-0-8186-0883-4
- ALEX PAUL PENTLAND: "A New Sense for Depth of Field", IEEE TRANSACTIONS ON PATTERN ANALYSIS AND MACHINE INTELLIGENCE, IEEE COMPUTER SOCIETY, USA, Bd. 30, Nr. 4, 1. Juli 1987 (1987-07-01), Seiten 523-531, XP011243033, ISSN: 0162-8828

## Beschreibung

### Technisches Gebiet

Die vorliegende Erfindung betrifft allgemein das technische Gebiet von optischen Abstandssensoren. Die vorliegende Erfindung betrifft insbesondere ein Verfahren sowie ein Sensorsystem zum optischen Ermitteln eines Abstands zwischen (i) einem Sensorsystem aufweisend einen Lichtempfänger und ein Objektiv und (ii) einem Objekt. Ferner betrifft die vorliegende Erfindung ein mobiles Gerät mit einem solchen Sensorsystem sowie mehrere Verwendungen für ein solches Sensorsystem.

### Hintergrund der Erfindung

Zur Bestimmung von Abständen können sog. 3D Sensorsysteme verwendet werden, welche eine Szene dreidimensional erfassen. Optische 3D Sensorsysteme können auf verschiedenen physikalischen Messprinzipien beruhen.

Sog. TOF (Time Of Flight) Sensorsysteme messen eine Lichtlaufzeit zwischen dem Aussenden eines zeitlich modulierten Beleuchtungslichts und dem Empfang von Messlicht durch einen Lichtempfänger, wobei das Messlicht an einem Objekt gestreutes Beleuchtungslicht ist. TOF Sensorsysteme haben jedoch den Nachteil, dass sie apparativ relativ komplex sind und zudem einen hohen Energieverbrauch haben, insbesondere für die Erzeugung des Beleuchtungslichts.

Sog. Stereometrie-Sensorsysteme bestimmen die dreidimensionale Charakteristik einer Szene basierend auf zumindest zwei Bildern der Szene, welche aus unterschiedlichen Richtungen aufgenommen worden sind. Für eine (einigermaßen) hohe Messgenauigkeit müssen die beiden Strahlengänge, die jeweils einer Bildaufnahme zugeordnet sind, räumlich voneinander beanstandet sein. Anders ausgedrückt müssen Objekte in der Szene aus stark unterschiedlichen Blickwinkeln aufgenommen werden. Daraus ergibt sich der Nachteil, dass Stereometrie-Sensorsysteme nur innerhalb eines vergleichsweise großen Bauraums realisiert werden können. Außerdem erfordert eine Auswertung der aus unterschiedlichen Blickrichtungen aufgenommenen Bilder in einer Datenverarbeitungseinrichtung eine relativ hohe Rechenleistung, was wiederum zu einem relativ hohen Energieverbrauch führt.

Ferner gibt es Sensorsysteme, welche eine strukturierte Beleuchtung (mit einem geometrischen Beleuchtungsmuster, beispielsweise ein Gitter) der zu erfassenden Szene aus einer ersten (schrägen) Richtung verwenden und eine Vermessung der durch die dreidimensionale Geometrie des betreffenden Objekts verursachten räumlichen Verzerrung der Beleuchtungsstruktur durchführen. Die Vermessung der räumlich verzerrten Beleuchtungsstruktur erfolgt entlang einer zweiten Richtung, welche unterschiedlich ist zu der ersten Richtung. Dadurch ergeben sich ähnliche Nachteile wie bei einem vorstehend beschriebenen Stereometrie-Sensorsystem.

Der vorliegenden Erfindung liegt die verfahrensbezogene Aufgabe zugrunde, ein Verfahren zum Ermitteln von Objektabständen anzugeben, welches mit einem einfach zu realisierenden Sensorsystem durchgeführt werden kann, das innerhalb einer kompakten Bauform realisiert und mit einem geringen Energiebedarf betrieben werden kann.

### Zusammenfassung der Erfindung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Aus der nachstehenden allgemeinen Beschreibung (von Ausführungsformen) der Erfindung geht hervor, dass eine Bewertung der Schärfe eines aufgenommenen Bildes für die in diesem Dokument beschriebene Erfindung erforderlich ist. Gegebenenfalls kann diese Bewertung auch lediglich die Information enthalten, ob das betreffende Bild eine gewisse Schärfeanforderung erfüllt oder nicht. Verfahren zur Erkennung der Schärfe eines aufgenommenen Bildes sind aus dem Stand der Technik bekannt und werden deshalb in diesem Dokument nicht im Detail erläutert. Lediglich beispielshaft seien an dieser Stelle die US 8,508,652 B2, die DE 691 17 688 T2 erwähnt. Die DE 10 2012 222 412 A1 offenbart die Objekterkennung mit Erfassen einer ersten Bildinformation mit einer ersten Brennweite einer Kamera sowie Erfassen einer zweiten Bildinformation mit einer zweiten Brennweite einer Kamera. Die WO 2013/069279 A1 offenbart die Bestimmung einer Tiefeninformation aus Bildern. Für Sensorsysteme mit festen Brennweiten kann für die Schärfeerkennung beispielsweise das in der US 9,565,381 B2 beschriebene Verfahren oder ein Phasenvergleichsverfahren auf Pixelebene eingesetzt werden. Insbesondere ein auf Pixelebenen durchgeführtes Phasenvergleichsverfahren erlaubt sowohl eine sehr schnelle als auch eine sehr hochauflösende Schärfeerkennung. Mit einem Phasenvergleichsverfahren lässt sich auch ein Maß bzw. ein Schärfe-Bewertungsfaktor für ein von einem Objekt aufgenommenen Bild ermitteln. Dies erlaubt es innerhalb eines Tiefenschärfebereiches um den Punkt bzw. Abstand der größten Schärfe eines Pixels eine positive oder negative Abweichung für unterschiedliche Schärfen zu ermitteln. Dadurch ist es möglich mit wenigen zu kombinierenden unterschiedlichen Fokuseinstellungen eines Objektivs erweiterte Tiefeninformationen zu ermitteln. Für das in diesem Dokument beschriebene Verfahren können aber auch entsprechende Phasendistanzinformation ausgewertet und so die jeweilige Abweichung vom Punkt der größten Schärfe ermittelt werden. Bei einer Kombination mehrerer solcher Bilder ist eine Abstandsermittlung über einen großen Bereich möglich.

Eine Besonderheit des in diesem Dokument beschriebenen Verfahrens besteht darin, dass der Abstand größter Schärfe nicht, wie eine einem sog. Autofokussystem einer Kamera, aufgrund eines erzeugten (und ausgewerteten) Bildes angepasst wird, sondern dass eine systematische Bildsammlung über mehrere Schärfebereiche gemacht wird oder quasi kontinuierlich Bilder des Objekts während einer kontinuierlichen Schärfeverstellung aufgenommen werden. Mit den vorstehend genannten an sich bekannten Methoden für eine Schärfeerkennung können sich für die in diesem Dokument beschriebene Erfindung noch folgende Vorteile ergeben:
(a) Die "Richtung" der Abweichung vom Abstand größter Schärfe kann ermittelt werden. Dabei bezeichnet die Richtung, ob der der betreffende Objektpunkt entweder von dem Sensorsystem weiter weg ist oder an dem Sensorsystem näher dran ist als der Abstand größter Schärfe.
(b) Für die Erkennung bzw. eine Messung der Schärfe "geht kein Licht verloren".
(c) Das beschriebene Verfahren kann unabhängig von Vorsatzlinsen, Brennweite und Apertur des Objektivs durchgeführt werden.
(d) Das beschriebene Verfahren kann auch bei sehr dunklen Lichtverhältnissen durchgeführt werden. Außerdem kann es auch mit Licht im infraroten Spektralbereich und insbesondere auch mit Wärmestrahlung durchgeführt werden.

Gemäß einem ersten Aspekt der Erfindung wird beschrieben ein Verfahren zum optischen Ermitteln eines Abstands zwischen (i) einem Sensorsystem aufweisend einen Lichtempfänger und ein Objektiv und (ii) einem Objekt, welches sich in einer Szene befindet. Das beschriebene Verfahren weist auf (a) ein Erzeugen eines scharfen ersten Bildes des Objekts auf dem Lichtempfänger bei einer ersten Fokuseinstellung des Objektivs, wobei der ersten Fokuseinstellung ein erster Tiefenschärfebereich zugeordnet ist; (b) ein Erzeugen eines scharfen zweiten Bildes des Objekts auf dem Lichtempfänger bei einer zweiten Fokuseinstellung, wobei der zweiten Fokuseinstellung ein zweiter Tiefenschärfebereich zugeordnet ist. Erfindungsgemäß sind der zweite Tiefenschärfebereich und der erste Tiefenschärfebereich unterschiedlich und die beiden Tiefenschärfebereiche überlappen sich in einem Überlappungsbereich räumlich. Basierend auf der ersten Fokuseinstellung und der zweiten Fokuseinstellung werden (c) berechnet eine erste Distanz zwischen dem Sensorsystem und einem in Bezug auf des Sensorsystem nahen Ende des Überlappungsbereiches und eine zweite Distanz zwischen dem Sensorsystem und einem in Bezug auf das Sensorsystem fernen Ende des Überlappungsbereiches. Ferner weist das beschriebene Verfahren auf (d) ein Ermitteln des Abstands basierend auf der ersten Distanz und der zweiten Distanz, wobei der ermittelte Abstand zwischen der ersten Distanz und der zweiten Distanz liegt.

Dem beschriebenen Verfahren liegt die Erkenntnis zugrunde, dass durch eine Interpolation zwischen zwei Distanzen, welche sich (i) aus der Größe bzw. Länge des Überlappungsbereiches und (ii) aus dem Abstand des Überlappungsbereiches von dem Sensorsystem ergeben, auf einfache Weise der Abstand zwischen dem Sensorsystem und dem Objekt ermittelt werden kann. Voraussetzung bei diesem Verfahren ist, dass bei beiden Fokuseinstellungen das Objekt scharf auf dem Lichtempfänger abgebildet wird, so dass die den beiden unterschiedlichen Fokuseinstellungen zugeordneten Tiefenschärfebereiche für die Abstandsermittlung verwendet werden können. Dies bedeutet, dass das Objektiv für beide Fokuseinstellungen zumindest eine gewisse Tiefenschärfe haben muss, weil nur dann die beiden zueinander unterschiedlichen Tiefenschärfebereiche überlappen können. Selbstverständlich verläuft bei diesem Verfahren der Strahlengang zwischen Objekt und Lichtempfänger durch das Objektiv.

Eine weitere Voraussetzung zum Durchführen des beschriebenen Verfahrens besteht darin, dass für beide Fokuseinstellungen die räumliche Ausdehnung des jeweiligen Tiefenschärfebereiches und der Abstand des Tiefenschärfebereiches zu dem Sensorsystem bekannt sein müssen. Anders ausgedrückt müssen für beide Tiefenschärfebereiche die räumlichen Abstände zwischen dem Sensorsystem und dem in Bezug auf das Sensorsystem bzw. das Objektiv nahen Ende und dem in Bezug auf das Sensorsystem bzw. das Objektiv fernen Ende des jeweiligen Tiefenschärfebereiches bekannt sein. Diese Abstände hängen jedoch in bekannter Weise lediglich von (bei beiden Tiefenschärfebereichen) vorgegebenen bzw. bekannten optischen Eigenschaften des Sensorsystems ab. Zu diesen Eigenschaften zählen insbesondere der Abstand zwischen dem Objektiv und dem Lichtempfänger und die numerische Apertur des Objektivs, welche wiederum insbesondere von der verwendeten Blende des Objektivs abhängt. Je kleiner diese Blende ist, desto größer ist der Tiefenschärfebereich. Je größer diese Blende ist, desto geringer ist der Tiefenschärfebereich (und desto höher ist die räumliche Auflösung der Abstandsermittlung).

Genauer ausgedrückt bestimmt die räumliche Ausdehnung des Überlappungsbereiches die räumliche Auflösung der Abstandsermittlung. Je kleiner der Überlappungsbereich ist desto höher ist die Auflösung der Abstandsermittlung. Allerdings wird es mit kleiner werdendem Überlappungsbereich immer schwieriger zwei passende Fokuseinstellungen zu finden, die einen kleinen Überlapp bilden, in welchem des Objekt scharf sowohl in dem ersten Bild als auch in dem zweiten Bild abgebildet ist.

Unter dem Begriff "Objektiv" kann in diesem Dokument jede beliebige optische Vorrichtung für eine Strahlengangformung verstanden werden, welche zu einer optischen Abbildung des Objekts auf dem Lichtempfänger führt. Eine solche Strahlengangformung kann mittels zumindest eines optisch refraktiven Elements, beispielsweise einer Linse oder eines Prismas, und/oder mittels zumindest eines optisch reflektiven Elements, insbesondere einem geeignet gekrümmten Spiegel, erfolgen. Im Bereich der Photographie wird ein für die Durchführung des beschriebenen Verfahrens bevorzugt verwendbares Objektiv typischerweise als "Teleobjektiv" bezeichnet.

Abhängig von der Konfiguration des Sensorsystems und insbesondere von dem Brennweitenbereich des Objektivs können mit dem beschriebenen Verfahren Abstände im Bereich zwischen 0,01 m und 10.000 m, bevorzugt zwischen 0,1 m und 1.000 m und weiter bevorzugt zwischen 0,2 m und 100m ermittelt werden.

Das beschriebene Verfahren hat den Vorteil, dass es bei vergleichsweise dunklen Umgebungsbedingungen durchgeführt werden kann. So reichen bei vielen Anwendungsfällen bereits Helligkeiten von zumindest 5 Lux aus. Bei anderen Anwendungsfällen werden Helligkeiten von zumindest 40 Lux oder 300 Lux benötigt. Dies bringt wiederum den Vorteil mit sich, dass häufig auf Beleuchtungsquellen zum Aufhellen einer von dem Sensorsystem erfassten Szene, in welcher sich das Objekt befindet, verzichtet werden kann. Damit kann das Sensorsystem besonders energieeffizient betrieben werden, was die Bandbreite möglicher Anwendungen für das beschriebene Verfahren erheblich erweitert.

Das beschriebene Verfahren kann zeitlich sehr schnell durchgeführt werden. Da eine Auswertung in Bezug auf die Schärfe des abgebildeten Objekts mit modernen Lichtempfängern und modernen Methoden zur elektronischen Bildanalyse sehr schnell sein kann, wird die Geschwindigkeit bzw. die Schnelligkeit des beschriebenen Verfahrens in der Praxis lediglich durch die Geschwindigkeit einer Fokusverstellung bestimmt. Ein (quasi) kontinuierliches Verstellen der Fokuseinstellung, im Rahmen welcher die beiden genannten Fokuseinstellungen "durchgefahren" werden, kann in weniger als einer Sekunde und häufig in weniger als in 0,1 Sekunden realisiert werden. Letzteres bedeutet, dass innerhalb einer Sekunde zumindest 10 Abstandsermittlungen durchgeführt werden können. Dies erlaubt auch eine quasi kontinuierliche Abstandermittlung zu bewegten Objekten. Sofern mehr als zwei räumlich voneinander beabstandete Sensorsysteme verwendet werden, mit denen jeweils das beschriebene Verfahren durchgeführt wird, können nicht nur Geschwindigkeiten von Objekten auf das Sensorsystem zu oder von diesem weg ermittelt werden. Durch eine Kombination der Messergebnisse beider Sensorsysteme können bei Berücksichtigung der gesamten räumlichen Geometrie der zweifachen Abstandsermittlungen Bewegungsrichtungen bzw. Bewegungsvektoren ermittelt werden.

Unter dem Begriff "Szene" kann insbesondere derjenige räumliche Bereich verstanden werden, welcher von dem Sensorsystem optisch erfasst wird. In der Szene befindliche Objekte können zusätzlich zu der beschriebenen Abstandsermittlung durch eine geeignete Bildauswertung erkannt werden. Dazu kann von einer Datenverarbeitungseinrichtung auf bekannte Methoden zur Bildauswertung und/oder Bildanalyse zurückgegriffen werden. Die Datenverarbeitungseinrichtung kann demzufolge ein spezieller Bildverarbeitungsprozessor sein und einen solchen aufweisen, der konfiguriert ist, bekannte Verfahren zur Bildauswertung und/oder Bildverarbeitung anzuwenden bzw. durchzuführen.

Unter dem Begriff "Objekt" kann jede räumlich körperliche Struktur verstanden werden, welche eine Oberflächenbeschaffenheit mit einer gewissen Kontur oder einem gewissen Kontrast aufweist, welche bzw. welcher auf dem Lichtempfänger abgebildet werden kann. Das Objekt kann ein Gegenstand wie beispielsweise ein Kraftfahrzeug oder ein Lebewesen wie beispielweise ein Mensch sein. Das Objekt kann ein in Bezug auf das Sensorsystem statisches bzw. ruhendes Objekt oder alternativ ein sich bewegendes Objekt sein.

Der Begriff "optisch" kann sich auf elektromagnetische Wellen beziehen, die eine bestimmte Wellenlänge bzw. Frequenz oder ein bestimmtes Spektrum von Wellenlängen bzw. Frequenzen haben. Insbesondere können die zum Einsatz kommenden elektromagnetischen Wellen dem für das menschliche Auge sichtbaren Spektralbereich zugeordnet werden. Alternativ oder in Kombination können auch elektromagnetische Wellen verwendet werden, die dem ultravioletten (UV) oder dem infraroten (IR) Spektralbereich zugeordnet sind. Der IR Spektralbereich kann sich bis in den langwelligen IR Bereich mit Wellenlängen zwischen 3,5 µm bis 15 µm erstrecken, welche mittels des Lichtempfängers des Sensors erfasst werden können.

Erfindungsgemäß weist das Verfahren ferner auf (a) ein Bewerten des scharfen ersten Bildes mit einem ersten Schärfe-Bewertungsfaktor und (b) ein Bewerten des scharfen zweiten Bildes mit einem zweiten Schärfe-Bewertungsfaktor. Das Ermitteln des Abstandes basiert ferner auf dem ersten Schärfe-Bewertungsfaktor und/oder auf dem zweiten ersten Schärfe-Bewertungsfaktor. Durch die Berücksichtigung der beiden Schärfe-Bewertungsfaktoren kann bei der vorstehend erwähnten Interpolation zwischen den beiden Distanzen auf vorteilhafte Weise eine Gewichtung vorgenommen werden, welche die Genauigkeit der Abstandsermittlung erhöht. Gemäß einem weiteren Ausführungsbeispiel der Erfindung weist das Verfahren ferner ein Kalibrieren des Objektivs in Bezug auf die erste Fokuseinstellung auf, wobei (a) ein in einem vorbestimmten ersten Abstand von dem Sensorsystem angeordnetes erstes Referenzobjekt bei verschiedenen ersten Test-Fokuseinstellungen auf dem Lichtempfänger abgebildet wird; (b) für jede erste Test-Fokuseinstellung ein Schärfegrad der Abbildung bestimmt wird und (c) diejenige erste Test-Fokuseinstellung, welche mit dem höchsten Schärfegrad verknüpft ist, als die kalibrierte erste Fokuseinstellung verwendet wird. Alternativ oder in Kombination weist das Verfahren ferner ein Kalibrieren des Objektivs in Bezug auf die zweite Fokuseinstellung auf, wobei (a) ein in einem vorbestimmten zweiten Abstand von dem Sensorsystem angeordnetes zweites Referenzobjekt bei verschiedenen zweiten Test-Fokuseinstellungen auf dem Lichtempfänger abgebildet wird; (b) für jede zweite Test-Fokuseinstellung ein Schärfegrad der Abbildung bestimmt wird und (c) diejenige zweite Test-Fokuseinstellung, welche mit dem höchsten Schärfegrad verknüpft ist, als die kalibrierte zweite Fokuseinstellung verwendet wird.

Durch die beschriebene Kalibrierung des Objektivs und damit auch des gesamten Sensorsystems kann die Genauigkeit der optischen Abstandsermittlung verbessert und/oder bei einem längeren Betrieb des Sensorsystems eine zumindest annähernd gleich (hohe) Genauigkeit gewährleistet werden. Dazu können die beschriebenen Kalibrierungsprozeduren nicht nur bei einer (Erst)Installation des Sensorsystems sondern auch später beispielsweise bei Wartungsarbeiten durchgeführt werden.

Gemäß einem weiteren Ausführungsbeispiel der Erfindung weist das Verfahren ferner auf ein Erzeugen eines scharfen dritten Bildes des Objekts auf dem Lichtempfänger bei einer dritten Fokuseinstellung des Objektivs, wobei der dritten Fokuseinstellung ein dritter Tiefenschärfebereich zugeordnet ist und der dritte Tiefenschärfebereich unterschiedlich ist sowohl zu dem zweiten Tiefenschärfebereich als auch zu dem ersten Tiefenschärfebereich. Gemäß einer ersten Alternative überlappen sich alle Tiefenschärfebereiche in dem Überlappungsbereich räumlich. Gemäß einer zweiten Alternative überlappen der dritte Tiefenschärfebereich und der zweite Tiefenschärfebereich in einem weiteren Überlappungsbereich räumlich. Gemäß der zweiten Alternative weist das Verfahren ferner auf ein Berechnen, basierend auf der zweiten Fokuseinstellung und der dritten Fokuseinstellung, (i) einer weiteren ersten Distanz zwischen dem Sensorsystem und einem in Bezug auf des Sensorsystem weiteren nahen Ende des weiteren Überlappungsbereiches und (ii) einer weiteren zweiten Distanz zwischen dem Sensorsystem und einem in Bezug auf das Sensorsystem weiteren fernen Ende des weiteren Überlappungsbereiches, wobei der Abstand ferner basierend auf der weiteren ersten Distanz und der weiteren zweiten Distanz ermittelt wird.

Bei der ersten Alternative dieser Ausführungsform wird der Überlappungsbereich durch die räumliche Überlappung von drei Tiefenschärfebereichen besonders genau definiert. Dadurch wird die Genauigkeit des beschriebenen Verfahrens weiter erhöht.

Bei der zweiten Alternative dieser Ausführungsform werden zwei räumliche Überlappungsbereiche bestimmt, welche jeweils in Bezug zu dem Sensorsystem ein nahes Ende und ein fernes Ende aufweisen. Der Abstandswert kann dann durch die Ergebnisse von zwei Interpolationen beispielsweise durch die Bildung eines Mittelwertes zwischen den beiden Interpolationsergebnissen ebenfalls mit einer erhöhten Genauigkeit ermittelt werden. Anders ausgedrückt erfolgt die Abstandermittlung durch eine geeignete mathematische Auswertung von insgesamt vier Distanzwerten, was die Genauigkeit des beschriebenen Verfahrens verbessert.

Es wird darauf hingewiesen, dass durch die Informationen, die man im Zusammenhang mit dem erzeugten scharfen dritten Bild erhält, auch (lediglich) eine Plausibilitätsüberprüfung des berechneten Abstands vorgenommen werden kann, welcher Abstand lediglich unter Verwendung des ersten scharfen Bildes und des zweiten scharfen Bildes bzw. der dazugehörigen Informationen über die dritte Fokuseinstellung und über den dritten Tiefenschärfebereich berechnet wurde.

Es wird ferner darauf hingewiesen, dass das beschriebene Verfahren im Prinzip (durch eine weitere räumliche Verschachtelung von Tiefenschärfebereichen) beliebig verfeinert werden kann, indem weitere scharfe Bilder des Objekts bei weiteren Fokuseinstellungen aufgenommen werden und die resultierenden räumlichen Informationen über den besonders genau bestimmten Überlappungsbereich (entspricht der ersten Alternative) oder über die Mehrzahl von bestimmten Überlappungsbereich (entspricht der zweiten Alternative) dazu verwendet werden, den Abstand zwischen dem Objekt und dem Sensorsystem noch genauer zu ermitteln.

Gemäß einem weiteren Ausführungsbeispiel der Erfindung wird die Fokuseinstellung des Objektivs kontinuierlich variiert und bei unterschiedlichen Fokuseinstellungen mit jeweils einem unterschiedlichen Tiefenschärfebereich wird eine Mehrzahl von Bildern des Objekts auf dem Lichtempfänger erzeugt, wobei zum Berechnen des Abstandes zumindest zwei der Bilder und die jeweils zugehörigen Fokuseinstellungen und Tiefenschärfebereiche verwendet werden.

Das beschriebene kontinuierliche Variieren der Fokuseinstellung erlaubt zumindest annähernd in Echtzeit eine Ermittlung des Abstands zwischen dem Objekt und dem Sensorsystem. Für die Abstandsermittlung können bei verschiedenen Fokuseinstellungen aufgenommene bzw. erzeugte Bilder des Objekts und die dazugehörigen Informationen über den jeweiligen Tiefenschärfebereich herangezogen werden. Es ist auch möglich, aus einer Vielzahl von erzeugten Bildern lediglich einige wenige zu verwenden, sodass Rechenleistung einer Datenverarbeitungseinrichtung des Sensorsystems eingespart werden kann. Dies trägt dann zu einer hohen Energieeffizienz eine Sensorsystems bei, mit dem das beschriebene Verfahren durchgeführt wird.

Gemäß einem weiteren Ausführungsbeispiel der Erfindung werden das erste scharfe Bild und/oder das zweite scharfe Bild in einem spektralen Wellenlängenbereich erzeugt, welcher sichtbares Licht und/oder infrarotes Licht umfasst.

Abhängig von der jeweiligen Anwendung kann das beschriebene Verfahren in einem Spektralbereich durchgeführt werden, welcher zu möglichst guten Bildern des Objekts führt. Dabei sollte ggf. beachtet werden, dass bei einem Objektiv mit refraktiven optischen Elementen aufgrund von Dispersion unterschiedliche Wellenlängen unterschiedlich stark gebrochen werden, was einen Einfluss auf die Fokuseinstellung hat. Allerdings kann der Einfluss von Dispersion für jedes refraktive Element berechnet werden, so dass die Dispersion und deren Einfluss auf die Fokuseinstellung für jedes (refraktive) Objektiv im Voraus berechnet und bei der Durchführung des beschriebenen Verfahrens berücksichtigt werden kann.

Es ist auch möglich, dass das Verfahren für mehrere in unterschiedlichen Spektralbereichen aufgenommene Bilder separat durchgeführt wird und die resultierenden Abstandsergebnisse, sofern sie verwertbar bzw. plausibel sind, zu einen besonderes zuverlässigem und/oder genauem Abstandsergebnis zusammengeführt werden.

Gemäß einem weiteren Ausführungsbeispiel der Erfindung weist das Objekt optisch erkennbare Strukturen für eine Kontrasterhöhung auf, anhand welcher beurteilt wird, ob ein von dem Lichtempfänger aufgenommenes Bild scharf ist und damit als erstes Bild bzw. als zweites Bild verwendbar ist. Dies hat den Vorteil, dass die Beurteilung, ob es sich bei einem aufgenommenen Bild um ein scharfes Bild handelt, mit einer besonders hohen Zuverlässigkeit durchgeführt werden kann. Die entsprechenden mit dem beschriebenen Verfahren gewonnenen Abstandsinformationen sind damit besonders valide.

Die optisch erkennbaren Strukturen können insbesondere Gitterlinien, Punkte, Kreislinien etc. sein.

Gemäß einem weiteren Ausführungsbeispiel der Erfindung weist das Verfahren ferner auf ein Projizieren der optisch erkennbaren Strukturen auf das Objekt. Dies hat den Vorteil, dass das beschriebene Verfahren auch mit Objekten ohne besondere optische Kontraste mit einer hohen Zuverlässigkeit durchgeführt werden kann, sofern diese Objekte eine für ein "Auf-Projizieren" geeignete Oberfläche aufweisen, auf welcher die projizierten Strukturen (für den Lichtempfänger) erkennbar sind.

Auch die projizierten optisch erkennbaren Strukturen können Gitterlinien, Punkte, Kreislinien etc. sein. Bevorzugt werden sie von einer Beleuchtungseinrichtung erzeugt, welche ebenfalls die Möglichkeit einer Fokuseinstellung hat, damit die Strukturen "scharf" auf das Objekt projiziert werden können. Nur wenn die Strukturen nämlich scharf auf das Objekt projiziert werden, dann können diese auch durch das Objektiv des Sensorsystems scharf auf den Lichtempfänger abgebildet werden. Das Erzeugen einer "scharfen Projektion" gleichzeitig mit dem Erzeugen eines scharfen ersten bzw. zweiten Bildes kann auch nach dem Prinzip "Try and Error" oder durch andere statistische Optimierungsprozeduren (dynamisch während eines reellen Betriebs des Sensorsystems) realisiert werden.

Gemäß einem weiteren Ausführungsbeispiel der Erfindung weist das Verfahren ferner auf (a) ein Erkennen des Objekts in dem ersten scharfen Bild und/oder in dem zweiten scharfen Bild; (b) ein Vergleichen des erkannten Objekts mit zumindest einem in einer Datenbank hinterlegten Vergleichsobjekt; und, wenn das Objekt innerhalb vorgegebener zulässiger Abweichungen mit einem Vergleichsobjekt übereinstimmt, (c) ein Identifizieren des Objekts als ein für eine bestimmte Aktion zugelassenes Objekt.

Die Objekterkennung kann insbesondere mittels einer dem Lichtempfänger nachgeschalteten Datenverarbeitungseinrichtung auf der Basis von bekannten Algorithmen zur Bildauswertung durchgeführt werden. Die zugelassene Aktion kann beispielsweise eine erlaubte Passage durch eine Öffnung in einem Gebäude sein, welche Öffnung vor der Identifizierung als zugelassenes Objekt durch einen Verschließkörper verschlossen ist und erst nach der erfolgreichen Identifizierung durch eine entsprechende Bewegung des Verschließkörpers geöffnet wird. Die zu identifizierenden Objekte können bevorzugt Personen und/oder Fahrzeuge sein. Eine erfolgreiche Identifizierung kann zur Steuerung bzw. zur Aktivierung eines Verschlussmechanismus für einen Verschließkörper vor einer Öffnung eines Gebäudes verwendet werden.

Es wird darauf hingewiesen, dass unter dem Begriff "Objekterkennung" nicht nur die Erkennung der Präsenz eines bestimmten Objekts verstanden werden kann. Vielmehr können auch objektindividuelle oder aktuell vorliegende Eigenschaften erkannt werden. Dazu zählt beispielsweise eine Erkennung einer Objektbewegung, eine Erkennung von Emotionen und/oder Gesten eines lebenden Objektes, insbesondere eines Menschen.

Gemäß einem weiteren Aspekt der Erfindung wird beschrieben ein Verfahren zum optischen Ermitteln einer Mehrzahl von Abständen zwischen (i) einem Sensorsystem aufweisend einen Lichtempfänger und ein Objektiv und (ii) jeweils einem Objekt von einer Mehrzahl von Objekten, die sich in einer Szene befinden. Das beschriebene Verfahren weist auf ein Durchführen des vorstehend beschriebenen Verfahrens für jedes der Mehrzahl von Objekten, wobei der Lichtempfänger eine Mehrzahl von lichtsensitiven Teilbereichen aufweist und jeweils eines der Mehrzahl von Objekten auf einen Teilbereich der Mehrzahl von lichtsensitiven Teilbereichen scharf abgebildet wird und die zugehörigen Tiefenschärfebereiche für das Ermitteln des jeweiligen Abstandes verwendet werden.

Dem beschriebenen Verfahren liegt die Erkenntnis zugrunde, dass das vorstehend beschriebene Verfahren auch für eine Abstandsermittlung für jeweils eine Mehrzahl von unterschiedlichen Objekten verwendet werden kann, die sich in einer Szene befinden aber (wahrscheinlich) unterschiedlich weit von dem Sensorsystem entfernt sind. Voraussetzung für eine solche "Mehrfach-Abstandsermittlung" ist, dass jedes der Objekte auf dem Lichtempfänger bei zumindest zwei unterschiedlichen Fokuseinstellungen scharf abgebildet wird. Sofern sich die Objekte in einem unterschiedlichen Abstand zu dem Sensorsystem befinden, werden bei einer bestimmten Fokuseinstellung nicht gleichzeitig alle Objekte scharf auf dem Lichtempfänger abgebildet. Um die Voraussetzung für eine scharfe Abbildung bei zwei unterschiedlichen Fokuseinstellungen zu erfüllen, ist es jedoch erforderlich, dass sich jedes Objekt in einem unterschiedlichen Raumwinkel befindet, welcher von dem Sensorsystem (mehr oder weniger scharf) erfasst wird.

Abhängig von der konkreten Konfiguration des verwendeten Sensorsystems und/oder von der räumlichen Ausprägung der von dem Sensorsystem erfassten Szene bzw. der darin enthaltenen Objekte können gleichzeitig die Abstände von zumindest zwei, bevorzugt von mehr als 20 und weiter bevorzugt von mehr als 100 Objekten zu dem Sensorsystem ermittelt werden. Abhängig von der dreidimensionalen Komplexität der erfassten Szene kann diese mehr oder weniger vollständig durch eine Bezugnahme auf eine Vielzahl von Objektabständen erfasst werden. Je unterschiedlicher die einzelnen Objektabstände sind, desto stärker muss die Fokuseinstellung des Objektivs variiert werden und desto höher ist die gesamte Anzahl der Bilder, die auf dem Lichtempfänger erzeugt und mittels einer Datenverarbeitungseinrichtung in Hinblick auf deren Schärfe ausgewertet werden.

Gemäß einem weiteren Aspekt der Erfindung wird beschrieben ein Sensorsystem zum Ermitteln eines Abstands zwischen dem Sensorsystem und einem Objekt, welches sich in einer Szene befindet. Das Sensorsystem weist auf (a) einen Lichtempfänger; (b) ein Objektiv zum Abbilden des Objekts auf dem Lichtempfänger, wobei in einer ersten Fokuseinstellung, der ein erster Tiefenschärfebereich zugeordnet ist, ein erstes scharfes Bild von dem Objekt auf dem Lichtempfänger erzeugbar ist, und in einer zweiten Fokuseinstellung, der ein zweiter Tiefenschärfebereich zugeordnet ist, ein zweites scharfes Bild von dem Objekt auf dem Lichtempfänger erzeugbar ist, wobei der zweite Tiefenschärfebereich und der erste Tiefenschärfebereich unterschiedlich sind und die beiden Tiefenschärfebereiche sich in einem Überlappungsbereich räumlich überlappen; und (d) eine Datenverarbeitungseinrichtung, welche dem Lichtempfänger nachgeschaltet ist und welche konfiguriert ist, um (i) basierend auf der ersten Fokuseinstellung und der zweiten Fokuseinstellung zu berechnen eine erste Distanz zwischen dem Sensorsystem und einem in Bezug auf des Sensorsystem nahen Ende des Überlappungsbereiches und eine zweite Distanz zwischen dem Sensorsystem und einem in Bezug auf das Sensorsystem fernen Ende des Überlappungsbereiches; und um (ii) basierend auf der ersten Distanz und der zweiten Distanz den Abstand zu ermitteln, wobei der Abstand zwischen der ersten Distanz und der zweiten Distanz liegt.

Auch dem beschriebenen Sensorsystem liegt die Erkenntnis zugrunde, dass durch eine Kombination von scharfen Bildaufnahmen bei unterschiedlichen Fokuseinstellungen auf einfache Weise eine Tiefeninformation in Bezug auf das Objekt ermittelt werden kann. Dabei werden charakteristische optische Eigenschaften des Objektivs, insbesondere die Tiefenschärfebereiche, bei den jeweiligen Fokuseinstellungen verwendet, um den Abstand zwischen dem Objekt und dem Sensorsystem zu ermitteln.

Das beschriebene Sensorsystem kann ferner eine Fokussierungseinrichtung zum Verstellen einer Fokuseinstellung des Objektivs aufweisen. In diesem Fall ist bevorzugt die Datenverarbeitungseinrichtung auch der Fokussierungseinrichtung nachgeschaltet, so dass Informationen über die aktuelle Fokuseinstellung des Objektivs an die Datenverarbeitungseirichtung übergeben werden können.

Gemäß einem weiteren Ausführungsbeispiel der Erfindung weist der Lichtempfänger einen ersten Teil-Lichtempfänger und einen zweiten Teil-Lichtempfänger auf und das Objektiv weist ein erstes Teil-Objektiv und ein zweites Teil-Objektiv auf. Das scharfe erste Bild wird mit dem ersten Teil-Objektiv auf den ersten Teil-Lichtempfänger scharf abgebildet und das scharfe zweite Bild wird mit dem zweiten Teil-Objektiv auf dem zweiten Teil-Lichtempfänger scharf abgebildet. Dieses Ausführungsbeispiel hat den Vorteil, dass beide Bilderzeugungen gleichzeitig durchgeführt werden können. Sofern die beiden Fokuseinstellungen bzw. die beiden Tiefenschärfebereiche einen geeigneten Überlapp aufweisen, ist keine Fokussierung der beiden Teil-Objektive erforderlich. Dies reduziert signifikant die zur Durchführung des beschriebenen Verfahrens erforderliche Zeitspanne. Es ist auch möglich, eine Fokuseinstellung bzw. Fokusveränderung bei nur einem der beiden Teilobjektive durchzuführen.

Es wird darauf hingewiesen, dass die beiden Teil-Lichtempfänger unterschiedliche Sensorbereiche von ein und demselben Lichtempfänger sind. Alternativ weist der beschriebene Lichtempfänger zwei getrennte Sensoren auf, die in diesem Dokument als Teil-Lichtempfänger bezeichnet sind. In entsprechender Weise können auch die beiden Teil-Objektive voneinander getrennte Objektive sein. Dies bedeutet, dass für das beschriebene Sensorsystem auch zwei getrennte Bildaufnahmesysteme verwendet werden können, welche jeweils einen eigenen (Teil-)Lichtempfänger und ein eigenes (Teil-)Objektiv umfassen. Dies bedeutet, dass einfach zwei separate Kameras beispielsweise von einem Smartphone für das beschriebene Sensorsystem verwendet werden können.

Das Sensorsystem kann auch mehrere Bildaufnahmesysteme mit jeweils einem (Teil-)Objektiv mit einer festen Fokuseinstellung umfassen. Dabei können Schärfeerkennungsmechanismen eingesetzt, welche zur Schärfefeststellung keine Veränderungen am Objektiv benötigen. Dann kann das beschriebene Sensorsystem ohne bewegliche Teile realisiert werden, was die mechanische Robustheit des Sensorsystems verbessert und zudem Abstandsermittlungen mit einer sehr hohen Wiederholrate erlaubt. Im Gegensatz beispielsweise zu 3D Sensorsystemen, die auf dem Prinzip der Lichtlaufzeitmessung basieren und als TOF (Time Of Flight) Sensorsysteme bezeichnet werden, ist die maximale Wiederholrate für Abstandsermittlungen hier nur durch die Auslesefrequenz (der Halbleitersensoren) der Lichtempfänger und/oder durch die Leistungsfähigkeit des Schärfeerkennungsmechanismus begrenzt. Dies erlaubt insbesondere für dynamische Erfassungen eine sehr einfache Skalierung für hohe (Abstands-) Erfassungsraten.

Gemäß einem weiteren Ausführungsbeispiel der Erfindung ist der Lichtempfänger ein einziger Lichtempfänger und das Objektiv ist ein einziges Objektiv. Dabei wird das Erzeugen der beiden scharfen Bilder bei den unterschiedlichen Fokuseinstellungen zeitlich nacheinander durchgeführt. Dieses Ausführungsbeispiel hat den Vorteil, dass das beschriebene Verfahren mit einem apparativ besonders einfachen und/oder einem besonders kompakt zu realisierenden Sensorsystem durchgeführt werden kann.

Gemäß einem weiteren Ausführungsbeispiel der Erfindung weist das Sensorsystem ferner eine Schärfe-Bewertungseinheit auf, welche dem Lichtempfänger nachgeschaltet ist und welche konfiguriert ist, das erste Bild mit einem ersten Schärfe-Bewertungsfaktor zu bewerten und das zweite Bild mit einem zweiten Schärfe-Bewertungsfaktor zu bewerten und die beiden Schärfe-Bewertungsfaktoren an die Datenverarbeitungseinrichtung zu übergeben. Die Datenverarbeitungseinrichtung ist konfiguriert, den Abstand zu ermitteln ferner basierend auf dem ersten Schärfe-Bewertungsfaktor und auf dem zweiten ersten Schärfe-Bewertungsfaktor.

Wie bereits vorstehend erwähnt, kann durch die Berücksichtigung der beiden Schärfe-Bewertungsfaktoren bei einer Interpolation zwischen den beiden Distanzen eine Gewichtung vorgenommen werden, welche die Genauigkeit der Abstandsermittlung erhöht.

Die beschriebene Schärfe-Bewertungseinheit kann mittels eines eigenen Moduls des Sensorsystems mittels Hardware und/oder Software realisiert werden. Alternativ kann die Funktionalität der Schärfe-Bewertungseinheit auch mittels einer geeigneten Software in der Datenverarbeitungseinrichtung implementiert sein.

Gemäß einem weiteren Ausführungsbeispiel der Erfindung weist das Sensorsystem ferner auf eine Schärfe-Anzeigeeinrichtung, welche der Schärfe-Bewertungseinheit und/oder der Datenverarbeitungseinrichtung nachgeschaltet ist und welche konfiguriert ist, den ersten Schärfe-Bewertungsfaktor und/oder den zweiten Schärfe-Bewertungsfaktor und/oder einen aus den beiden Schärfe-Bewertungsfaktoren abgeleiteten Wert anzuzeigen.

Die Anzeige der Schärfe-Bewertungsfaktoren kann insbesondere für eine Bedienperson von Vorteil sein, welche im Falle einer hohen Bewertung, was einer hohen Schärfe entspricht, Rückschlüsse auf die Zuverlässigkeit des ermittelten Abstands ziehen kann. Im Falle einer sehr niedrigen Bewertung kann die Bedienperson beispielsweise versuchen, das vorstehend beschriebenen Verfahren bei einem anderen Beleuchtungslicht, insbesondere unter helleren Bedingungen, erneut durchzuführen, um so zu zuverlässigeren Abstandsermittlungen zu gelangen.

Der aus den beiden Schärfe-Bewertungsfaktoren abgeleitete Wert kann ein Zuverlässigkeitswert sein, welcher es einer Bedienperson auf einfache Weise ermöglicht, die Zuverlässigkeit des ermittelten Abstandes einzuschätzen.

Es wird darauf hingewiesen, dass die Schärfe-Anzeigeeinrichtung die entsprechenden Schärfe-Bewertungsfaktoren auch an ein in Bezug auf das Sensorsystem externes System übergeben kann, welches die Schärfe-Bewertungsfaktoren für ihren Betrieb verwendet. Ein solches externes System kann beispielsweise ein Zugangssystem sein, welches einen Eingang zu einem grundsätzlich abgesperrten Bereich nur dann freigibt, wenn basierend auf mit hoher Genauigkeit und Zuverlässigkeit ermittelten Abstandsinformationen das Objekt (mit hoher Genauigkeit und Zuverlässigkeit) erkannt und/oder dessen Position und/oder dessen Geschwindigkeit erfasst worden ist. Um eine versehentliche Freigabe des Eingangs basierend auf wenig zuverlässigen Abstandsinformationen zu verhindern, können kleine Schärfe-Bewertungsfaktoren als ein "Zugang-Verhinderungssignal" verwendet werden.

Gemäß einem weiteren Ausführungsbeispiel der Erfindung ist die Datenverarbeitungseinrichtung konfiguriert, optische Umgebungsbedingungen von dem Objekt zu erkennen, welche eine scharfe Abbildung des Objekts auf den Lichtempfänger zumindest erschweren oder verunmöglichen.

Umgebungsbedingungen, welche eine scharfe Abbildung des Objekts auf dem Lichtempfänger erschweren, können beispielsweise vorhandener Rauch, Nebel, Schnee, Regen, Graupel, Hagel, Laub, etc. sein. Erkannt werden können solche Umgebungsbedingungen beispielsweise dann, wenn es überhaupt nicht möglich ist, eine scharfe Abbildung des Objekts auf dem Lichtempfänger zu erzeugen. Ferner können die vorstehend beschriebenen Schärfe-Bewertungsfaktoren, insbesondere bei einer Vielzahl von verschiedenen Fokuseinstellungen, dazu verwendet werden, Rückschlüsse auf die optischen Umgebungsbedingungen zu ziehen.

Gemäß einem weiteren Ausführungsbeispiel der Erfindung ist das Objektiv ein telezentrisches Objektiv. Alternativ oder in Kombination weist das Objektiv elektrisch verstellbare optische Elemente auf.

Durch die Verwendung eines telezentrischen Objektivs kann auf vorteilhafte Weise sichergestellt werden, dass eine Verstellung der Fokussierung bzw. Scharfstellungsprozesse keinen Verzug des Szenenausschnittes bewirken.

Elektrisch verstellbare optische Elemente, insbesondere Linsen, können auf vorteilhafte Weise eine sehr schnelle Verstellung der Fokuseinstellung ermöglichen und tragen damit zu einer schnellen Abstandsermittlung durch das beschriebene Sensorsystem bei. Ferner erleichtern elektrisch verstellbare optische Elemente ein kontinuierliches Durchfahren eines insgesamt zur Verfügung stehenden Fokusbereiches mit den dazugehörigen Bildaufnahmeserien. Dadurch lassen sich die auf Schärfeanalysen basierenden Abstandsmessungen mit einer hohen Wiederholrate, beispielsweise etliche Hertz, durchführen. Dadurch kann auch eine Bewegungscharakteristik eines sich innerhalb der von dem Sensorsystem erfassten Szene bewegten Objekts erfasst werden.

Gemäß einem weiteren Ausführungsbeispiel der Erfindung weist das Sensorsystem ferner auf eine mit dem Lichtempfänger gekoppelte Lichtempfänger-Steuereinrichtung, wobei die Lichtempfänger-Steuereinrichtung und der Lichtempfänger derart konfiguriert sind, dass in einem modifizierten Betrieb des Sensorsystems zumindest zwei Pixel einer Vielzahl von Pixel des Lichtempfängers zu einem übergeordneten Pixel zusammengefasst sind.

Typischerweise werden zumindest einige der Vielzahl von Pixel dahingehend zusammengefasst, dass jeweils eine gewisse Anzahl von Pixel zu einem übergeordneten Pixel zusammengefasst wird. Die gewisse Anzahl kann dabei beispielsweise (bevorzugt) zwei, drei, (bevorzugt) vier, sechs, (bevorzugt) acht, oder (bevorzugt) neun sein. Selbstverständlich ist auch eine noch stärkere Zusammenfassung von Pixeln möglich.

Ein Zusammenfassen von Pixeln, welches auch als "Binning" bezeichnet wird, hat die Wirkung, dass auf Kosten der räumlichen Auflösung die Anzahl an Photonen des von dem Lichtempfänger empfangenen Messlichts, die während einer Objekterfassung von einem Pixel eingesammelt bzw. akkumuliert werden, entsprechend der Anzahl an zu einem übergeordneten Pixel zusammengefassten Pixel erhöht wird. Dadurch verringert sich insbesondere bei einem schwachen Messlicht das sog. statistische Photonenrauschen, was die Auswertegenauigkeit nicht nur in Bezug auf die Abstandsermittlung sondern auch eine zumindest teilweise Szenenauswertung verbessert. Ein "Binning" ist deshalb insbesondere bei relativ dunklen Umgebungsbedingungen dann von Vorteil, wenn eine hohe räumliche Auflösung nicht (zwingend) erforderlich ist. Durch ein "Binning" kann auch Energie für eine gegebenenfalls erforderliche Beleuchtung der Szene durch eine Beleuchtungseinrichtung eingespart werden, welche nachfolgend anhand von mehreren Ausführungsbeispielen der Erfindung beschrieben wird.

Es wird darauf hingewiesen, dass über die Fläche des Lichtempfängers ein Binning auch lokal in lediglich zumindest einem Teilbereich der aktiven Flächen des Lichtempfängers durchgeführt werden kann. Dies führt dann zwar zu einer inhomogenen räumlichen Auflösung, welche nicht unbedingt gewünscht ist. Der Nachteil einer solchen inhomogenen räumlichen Auflösung wird aber in vielen Anwendungsfällen durch die erhöhte Photonenakkumulation überkompensiert. Ein lokales "Binning" kann zumindest bei einigen bekannten Lichtempfängern ohne besondere elektronische oder apparative Elemente einfach durch eine entsprechende Ansteuerung des Lichtempfängers erfolgen, welche Ansteuerung das "Binning" und damit den Betriebsmodus des Sensorsystems bestimmt. V: Bei bevorzugten Ausführungsformen wird ein lokales "Binning" dahingehend durchgeführt, dass, von dem Lichtempfänger gemessen und/oder von der Datenverarbeitungseinrichtung erlernt, genau diejenigen Bereiche des Lichtempfängers, welche bei zumindest einer vorherigen Szenenerfassung zu wenig Lichtintensität erhalten haben, durch eine geeignete Ansteuerung des Lichtempfängers durch die Lichtempfänger-Steuereinrichtung bei nachfolgenden Szenenerfassungen in geeigneter Weise zu übergeordneten Pixel zusammengefasst werden. Ein solches dynamisch gesteuertes oder - genauer ausgedrückt - geregeltes "Binning" kann während eines üblichen Betriebs des Sensorsystems (erlernt) und/oder während der Konfiguration des Sensorsystems beispielsweise im Rahmen einer (Erst)Installation, einer Wartung, einer zyklischen bzw. automatischen Re-Konfiguration etc. durchgeführt werden.

Es wird darauf hingewiesen, dass bei einer nicht quadratischen Anzahl an zu einem übergeordneten Pixel zusammengefassten einzelnen Pixeln die räumliche Auflösung des Lichtempfängers entlang unterschiedlicher Richtungen jedenfalls dann unterschiedlich ist, wenn die einzelnen Pixel eine quadratische Form haben. Dies kann bei manchen Anwendungsfällen in vorteilhafter Weise ausgenutzt werden. Ein solcher Anwendungsfall liegt beispielsweise dann vor, wenn (zusätzlich zu der beschriebenen Abstandsermittlung) eine Bewegung des betreffenden Objekts entlang einer vorbekannten Raumrichtung mit hoher Genauigkeit erfasst werden soll. In einem solchen Fall kann die Anzahl an Pixel, welche entlang einer Linie senkrecht zu dieser vorbekannten Raumrichtung (so wie sie auf dem Lichtempfänger abgebildet ist) angeordnet sind, größer sein als die Anzahl an Pixel, welche entlang einer dazu senkrechten Linie angeordnet sind. Dann ist die räumliche Auflösung entlang der Bewegungsrichtung größer als die räumliche Auflösung senkrecht zu der Bewegungsrichtung und das Bewegungsprofil eines solchen linear bewegten Objekts kann mit einer besonders hohen Genauigkeit auch bei einem vergleichsweise schwachen Messlicht ermittelt werden.

Es wird ferner darauf hingewiesen, dass das beschriebene Binning auch adaptiv als Reaktion auf zumindest eine zuvor erfasste (und ausgewertete) Objekterfassung (auf automatische Weise) aktiviert werden kann. Dies bedeutet, dass das "Binning" von der Lichtempfänger-Steuereinrichtung nicht nur gesteuert sondern abhängig von den durch eine Szenenauswertung gewonnenen Ergebnissen geregelt wird. Dadurch wird ein besonders zuverlässiger Betrieb des beschriebenen Sensorsystems auch bei relativ dunklen Umgebungsbedingungen ermöglicht, so dass das beschriebene Sensorsystem auch mit einem entsprechend schwachen Beleuchtungslicht und damit auf energieeffiziente Weise betrieben werden kann.

Gemäß einem weiteren Ausführungsbeispiel der Erfindung weist das Sensorsystem ferner eine Beleuchtungseinrichtung zum Beleuchten der Szene mit einem Beleuchtungslicht auf.

In vielen Anwendungsfälle kommt das in diesem Dokument beschriebene Verfahren mit einer passiven Beleuchtung der Szene beispielsweise durch vorhandenes Tageslicht oder ohnehin vorhandenes Kunstlicht aus. Dies gilt insbesondere dann, wenn der Lichtempfänger in der Lage ist, diejenigen Spektralanteile des vorhandenen Lichtes mit einer hohen Effizienz zu erfassen, welche in dem passiven Beleuchtungslicht besonders stark vorkommen. Dies kann in besonderen Maße für sichtbares Licht oder infrarotes (IR) Licht gelten.

Trotzdem kann es bei manchen schwierigen Lichtverhältnissen, beispielsweise bei Dunkelheit, sinnvoll sein, die Szene oder zumindest das sich in der Szene befindliche Objekt zu beleuchten, um für die zumindest zwei Bilderzeugungen ausreichend Licht zur Verfügung zu haben. Eine solche aktive Beleuchtung kann mit der beschriebenen Beleuchtungseinrichtung realisiert werden. Diese kann auch dazu beitragen, die Immunität des beschriebenen Sensorsystems gegenüber Störungen durch unerwünschtes und nicht kontrollierbares Fremdlicht zu erhöhen. Diese aktive Beleuchtung kann mit strukturiertem oder unstrukturiertem Licht erfolgen.

Gemäß einem weiteren Ausführungsbeispiel der Erfindung weist das Sensorsystem ferner auf eine mit der Beleuchtungseinrichtung gekoppelte Beleuchtungslicht-Steuereinrichtung, welche konfiguriert ist, die Beleuchtungseinrichtung derart anzusteuern, dass eine Charakteristik des Beleuchtungslichts während eines Betriebes des Sensorsystems veränderbar ist.

Durch eine (dynamische) Veränderbarkeit der Charakteristik des Beleuchtungslichts kann ein und dieselbe Szene bzw. ein und dasselbe Objekt (nacheinander) nicht nur mit unterschiedlichen Fokuseinstellungen sondern auch bei unterschiedlichen Beleuchtungsbedingungen (mehrfach) aufgenommen werden. Dadurch stehen der Datenverarbeitungseinrichtung unterschiedliche Datensätze von dem Objekt zur Verfügung, sodass mittels einer geeigneten Methode der Bildanalyse (von der Datenverarbeitungseinrichtung) derjenige Datensatz für die Abstandsermittlung (basierend auf den optischen Eigenschaften des Objektivs bei den zumindest zwei unterschiedlichen Fokuseinstellungen, insbesondere die räumliche Lagen der beiden Tiefenschärfebereiche) verwendet werden kann, welcher das Objekt am genauesten wiedergibt. Dabei kann gegebenenfalls ein "a priori Wissen" über die strukturellen und/oder kontrastrelevanten Eigenschaften von dem Objekt berücksichtigt werden.

Ferner kann eine optimale Beleuchtungscharakteristik auch nach dem Prinzip "Try-and-Error" oder durch andere statistische Optimierungsprozeduren ermittelt werden. Dies kann dynamisch während eines reellen Betriebs des Sensorsystems oder im Rahmen einer Kalibrierung mittels Abstandmessungen zu an vorbekannten Positionen befindlichen geeigneten Referenzobjekten erfolgen.

Bei manchen Ausführungsformen können auch die bei unterschiedlichen Beleuchtungscharakteristiken aufgenommenen scharfen Bilder von einem Objekt oder von mehreren Objekten gemeinsam verarbeitet werden, sodass für eine finale Abstandsermittlung ein umfangreicher Datensatz zur Verfügung steht. Bei einer solchen gemeinsamen Verarbeitung in Hinblick auf Abstandsermittlungen für mehrere Objekte, die sich in unterschiedlichen Teilbereichen der Szene befinden, können die unterschiedlichen Teilbereiche unterschiedlich beleuchtet werden. Dies bedeutet, dass ein erster Teilbereich der Szene (insbesondere mit einem ersten Objekt) mit einer ersten Beleuchtungscharakteristik beleuchtet wird und dass ein zweiter Teilbereich der Szene (insbesondere mit einem zweiten Objekt) mit einer zweiten (zu der ersten unterschiedlichen) Beleuchtungscharakteristik aufgenommen wird.

Gemäß einem weiteren Ausführungsbeispiel der Erfindung ist die Charakteristik des Beleuchtungslichts durch zumindest eines der folgenden Merkmale bestimmt ist: (a) Wellenlänge; (b) spektrale Intensitätsverteilung; (c) Polarisationsrichtung und (d) Intensitätsverteilung für unterschiedliche Polarisationsrichtungen. Dies hat den Vorteil, dass die Beleuchtung in Hinblick auf eine gute Erkennbarkeit des Objekts auf dem erzeugten Bild an die optischen Eigenschaften des Objekts angepasst werden kann. So kann zur Beleuchtung bevorzugt Beleuchtungslicht mit denjenigen charakteristischen Merkmalen verwendet werden, welches für eine gute Objekterkennbarkeit sorgt. Beleuchtungslicht mit anderen charakteristischen Merkmalen, welche nicht zu einer guten Objekterkennbarkeit beitragen, können aus dem möglichen Spektrum an charakteristischen Merkmalen weggelassen werden. Dadurch wird die energetische Effizienz der Beleuchtung durch die beschriebene Beleuchtungseinrichtung verbessert.

Durch eine anwendungsspezifische Verwendung von einem dieser Merkmale oder durch eine geeignete Kombination von zumindest zweien dieser Merkmale können zudem die zu betreffenden Objekte besonders gut beleuchtet und als Ergebnis mit besonders hoher Genauigkeit und Zuverlässigkeit deren Abstand zu dem Sensorsystem ermittelt werden.

Die Wellenlänge, Frequenz bzw. Farbe des Beleuchtungslichts kann durch eine geeignete Ansteuerung von spektral unterschiedlichen Leuchtelementen, insbesondere LEDs mit unterschiedlicher Farbe, variiert bzw. an die zu erwartenden optischen Eigenschaften des Objekts angepasst werden. Die Polarisationsrichtung des Beleuchtungslichts kann auf bekannte Weise beispielsweise durch die Verwendung von Polarisationsfiltern eingestellt werden. Die relevanten optischen Eigenschaften des Objekts sind in diesem Zusammenhang insbesondere das Reflexions- bzw. das Streuverhalten der Oberfläche des betreffenden Objekts.

Gemäß einem weiteren Ausführungsbeispiel der Erfindung beschreibt die Charakteristik des Beleuchtungslichts eine Abhängigkeit der Beleuchtungsintensität des Beleuchtungslichts von dem Raumwinkel der zu beleuchtenden Szene.

Durch eine hinsichtlich der Intensität variable Ausleuchtung der zu erfassenden Szene kann eine optimale Beleuchtung erreicht werden, welche im Ergebnis dazu führt, dass potentielle Objekte, welche sich in verschiedenen jeweils einem Raumwinkel(bereich) zugeordneten Teilbereichen der Szene befinden, zumindest annähernd gleich hell auf dem Lichtempfänger abgebildet werden. Dadurch kann vermieden werden, dass es in einem Bild der erfassten Szene unterbelichtete und/oder überbelichtete Teilbereiche gibt. Die Charakteristik des Beleuchtungslichts kann damit so eingestellt werden, dass die Intensität des von dem Lichtempfänger empfangenen und von dem jeweiligen Objekt reflektierten bzw. zurückgestreuten Beleuchtungslicht stets gerade so hoch ist, wie es für eine zuverlässige Erfassung des dem jeweiligen Raumwinkelbereich zugeordneten Teilbereichs der Szene erforderlich ist. Dadurch wird für die Beleuchtung lediglich so viel Energie benötigt, wie es erforderlich ist, so dass sich das beschriebene Sensorsystem im Ergebnis durch eine gute Energieeffizienz auszeichnet.

Anschaulich ausgedrückt verwendet die hier beschriebene Ausführungsform des Sensorsystems eine Beleuchtungseinrichtung, die ortsabhängig unterschiedliche Beleuchtungsstärken verwendet. Dadurch kann für eine Szenenüberwachung beispielsweise für eine Alarmanlage oder eine Tür- bzw. Toröffnung Energie eingespart werden. Es ist auch nicht erforderlich, dass das Beleuchtungslicht die gesamte zu erfassende Szene mit einer raumwinkelabhängigen Intensitätsverteilung mit einer stets von der Intensität Null verschiedenen Intensität beleuchtet. Vielmehr reicht es häufig aus, wie vorstehend bereits beschrieben, dass eine Beleuchtungsstruktur in bzw. auf die Szene projiziert wird, die einen für eine Objekt-Abstandserfassung ausreichenden Kontrast liefert. Insbesondere können zumindest einige Teilbereiche der Szene mit diskreten Beleuchtungspunkten, Gitterlinien etc. beleuchtet werden. Dabei sollte die Beabstandung der diskreten Beleuchtungsstrukturen in der Szene kleiner sein als das betreffende Objekt.

Insbesondere unter dem Aspekt eines energetisch effizienten Betriebs der Beleuchtungseinrichtung und damit des gesamten Sensorsystems interessant sind Ausführungsformen, bei denen weiter entfernt liegende Teilbereiche der Szene stärker beleuchtet werden als näher liegende Teilbereiche, so dass das an dem Lichtempfänger ankommende Signal zumindest für gleich stark reflektierende bzw. Licht streuende Objekte, die sich in unterschiedlichen Raumwinkelbereichen befinden, weitgehend gleich stark und damit über die gesamte Szene weitgehend ausgeglichen ist. Eine solche distanzbasierte raumwinkelabhängige Szenenbeleuchtung kann auch von dem Sensorsystem eingelernt werden, indem beispielsweise angenommen wird, dass sich über einen längeren Zeitraum hinweg in jedem Raumwinkelbereich verschieden hell reflektierende bzw. streuende Objekte befinden, so dass die mittlere Helligkeit der in jedem Raumwinkelbereich über die Zeit vielen Objekte weitgehend gleich ist. Auch eine szenenabhängig adaptive raumwinkelabhängige Verteilung der Beleuchtungsintensität ist möglich.

Die räumliche Verteilung des Beleuchtungslichts kann durch eine individuelle Ansteuerung von einzelnen Beleuchtungslichtquellen, beispielsweise Leuchtdioden oder Laserdioden, der Beleuchtungseinrichtung vorgenommen werden, sofern jeweils eine dieser Beleuchtungslichtquellen einem bestimmten Raumwinkelbereich zugeordnet ist. Alternativ oder in Kombination kann auch eine Vielzahl von beweglichen Ablenkspiegeln beispielsweise eines Mikrospiegelarrays realisiert werden, das aus der sog. Digital Light Processing (DLP) Projektionstechnik bekannt ist. Auch mit sog. Mikro Elektro Mechanische Systeme (microelectromechanical systems, MEMS) Vorrichtungen lassen sich eine Vielzahl von Ablenkspiegeln derart bewegen, dass es zu einer gewünschten raumwinkelabhängigen Beleuchtungsintensität kommt. Insbesondere die individuelle Ansteuerung von einzelnen Beleuchtungslichtquellen kann aus energetischer Sicht besonders vorteilhaft sein, weil lediglich das Beleuchtungslicht erzeugt wird, welches auch tatsächlich gebraucht wird.

Gemäß einem weiteren Ausführungsbeispiel der Erfindung ist die Beleuchtungslicht-Steuereinrichtung mit der Datenverarbeitungseinrichtung gekoppelt und die Beleuchtungslicht-Steuereinrichtung ist konfiguriert, basierend auf einer Auswertung der dreidimensionalen Charakteristik der Szene durch die Datenverarbeitungseinrichtung die Charakteristik des Beleuchtungslichts zu verändern.

Unter dem Begriff "Charakteristik einer Szene" kann die Gesamtheit aller räumlichen Strukturen und/oder Objekte verstanden werden, welche von dem Sensorsystem erfasst werden. Dabei können von der Datenverarbeitungseinrichtung mittels einer Bildverarbeitung und/oder Bilderkennung manche Strukturen bzw. Objekte als relevant und andere Strukturen als weniger oder sogar als irrelevant erkannt werden.

Anschaulich ausgedrückt hängt bei diesem Ausführungsbeispiel die Art und Weise, wie die Szene für eine Objekterfassung raumwinkelabhängig und/oder in Bezug auf charakteristische Merkmale des Beleuchtungslicht von der Beleuchtungseinrichtung beleuchtet wird, von Mess- und Auswertungsergebnissen ab, die aus einer vorherigen Szenen- bzw. Objekterfassung ermittelt worden sind. Die Charakteristik der Beleuchtung wird also dynamisch aufgrund von Messergebnissen einer vorherigen Szenen- bzw. Objekterfassung und einer entsprechenden Szenen- bzw. Objektauswertung angepasst. Damit findet korrekt ausgedrückt nicht mehr lediglich eine Steuerung der Beleuchtungseinrichtung sondern vielmehr eine Regelung derselben statt. Dies erlaubt auf vorteilhafte Weise eine besonders genaue Adaption der Szenenbeleuchtung in Hinblick auf optimale Ermittlung von einem Objektabstand oder von mehreren Objektabständen.

Es wird darauf hingewiesen, dass eine geeignete Steuerung bzw. Regelung der Beleuchtungseinrichtung auch von aktuellen Umgebungsbedingungen abhängen kann, welche sich in dem Ergebnis der Szenenauswertung widerspiegeln. Solche Umgebungsbedingungen können Wetterbedingungen wie beispielsweise das Vorhandensein von Regen, Schnee, Hagel, Nebel, Rauch, Schwebepartikeln, etc. in der Szene sein.

Gemäß einem weiteren Ausführungsbeispiel der Erfindung ist die Datenverarbeitungseinrichtung ferner derart konfiguriert, dass eine Bedeckungscharakteristik einer von einem Objekt zu passierenden Öffnung durch zumindest einen Verschließkörper steuerbar ist. Dadurch kann die Öffnung, welche beispielsweise ein Eingang (bzw. ein Ausgang) eines Gebäudes ist, auf energetisch günstige Weise automatisch überwacht werden und durch eine geeignete Ansteuerung eines Aktuators kann der Verschließkörper automatisch zwischen einer geöffneten Position und einer geschlossenen Position bewegt werden. Dazu kann die Datenverarbeitungseinrichtung des beschriebenen Sensorsystems mit der Steuerung eines bekannten Steuersystems für einen Verschließkörper gekoppelt werden.

Gemäß einem weiteren Aspekt der Erfindung wird ein mobiles Gerät mit einem vorstehend beschriebenen Sensorsystem beschrieben.

Dem beschriebenen mobilen Gerät liegt die Erkenntnis zugrunde, dass die in diesem Dokument beschriebene und sehr einfache Bestimmung von Abstands- bzw. Tiefeninformationen in einem mobilen Gerät auf gewinnbringende Weise eingesetzt werden kann, weil solche mobile Geräte bereits heutzutage über mehre Kameras verfügen, welche den für die Durchführung des beschriebenen Verfahrens erforderlichen Lichtempfänger sowie das erforderliche Objektiv aufweisen. Damit kann das beschriebene Sensorsystem meist ohne zusätzlichen Aufwand für neue Hardware-Komponenten in einem solchen mobilen Gerät implementiert werden.

Das mobile Gerät kann beispielsweise sein (a) ein Mobiltelefon, insbesondere ein Smartphone, (b) ein PDA (Personal Digital Assistant), (c) ein Tablet PC, (d) ein tragbarer Computer bzw. Notebook, (d) ein Navigationsgerät etc. sein.

Insbesondere wenn ein derartiges mobiles Gerät eine Beleuchtungseinrichtung, beispielsweise Leuchtdioden für einen Blitz und/oder eine "Taschenlampenbeleuchtung" aufweist, wie es beispielsweise bei modernen Smartphones der Fall ist, dann kann mit den vorstehend beschriebenen Möglichkeiten der Einsparung von Beleuchtungsenergie zu einem energieeffizienten Betrieb des betreffenden mobilen Geräts beigetragen werden. Die Beleuchtung kann aber auch mit Infrarotlicht erfolgen, so dass der Benutzer des mobilen Gerätes nicht durch sichtbares Licht gestört wird.

Gemäß einem weiteren Aspekt der Erfindung wird beschrieben eine Verwendung eines vorstehend beschriebenen Sensorsystems für ein Steuern einer Bedeckungscharakteristik einer von einem Objekt zu passierenden Öffnung durch zumindest einen Verschließkörper.

Der beschriebenen Verwendung liegt die Erkenntnis zugrunde, dass eine auf energetisch effiziente Weise vorgenommene Erfassung und Auswertung einer optischen Szene basierend auf Abstandsinformationen zwischen dem Sensorsystem und verschiedenen in der Szene befindlichen Objekten auf vorteilhafte Weise bei Durchgängen eingesetzt werden kann, welche von einem Verschließkörper verschlossen werden können. Dies gilt insbesondere für Durchgänge, welche eine Verschließ- bzw. eine Bedeckungscharakteristik aufweisen, die von dem beschriebenen Sensorsystem gesteuert oder zumindest mitgesteuert wird. Da solche Sensorsysteme üblicherweise durch die Verschlusssysteme für die Verschließkörper mit Energie versorgt werden, ist es besonders wichtig, mit einer vergleichsweise geringen Energiemenge auszukommen und trotzdem zu zuverlässigen dreidimensionalen Szenenauswertungen zu kommen.

Durch die erfindungsgemäße Verwendung des vorstehend beschriebenen Sensorsystems können auf energetisch effiziente Weise auch größere Distanzen überwacht werden, welches naturgemäß zu einem früheren Erkennen einer Öffnungsanforderung des Verschlusskörpers führt, was insbesondere bei sich schnell bewegenden Objekten von großem Vorteil sein kann. Ferner kann die Szene mit einem breiteren Erfassungswinkel erfasst werden, was beispielswiese zu einem frühzeitiges Erkennen von sich quer zur Öffnung bewegenden Querverkehr und damit zu einem zuverlässigeres Erkennen von Objekten im Sicherheitsbereich des Verschlusssystems führen kann. Dadurch kann bei Querverkehr eine unnötige Öffnungsanforderung unterdrückt werden.

Gemäß einer bevorzugten Ausführungsform der Erfindung ist die Öffnung ein Eingang oder ein Ausgang, insbesondere ein Notausgang in einem Gebäude. Alternativ oder in Kombination ist das Objekt eine Person oder ein Fahrzeug.

Durch das Erkennen eines zwar vorhandenen, aber sich ggf. nicht bewegenden Objektes in einem Durchgangsbereich kann ein Eingang oder Ausgang überwacht, insbesondere ein blockierter Notausgang erkannt, und die entsprechende Information an ein angegliedertes System, beispielsweise an ein Überwachungssystem, übermittelt werden. Das Gebäude kann insbesondere ein Haus bzw. eine Garage sein.

Gemäß einem weiteren Aspekt der Erfindung wird beschrieben eine Verwendung eines vorstehend beschriebenen Sensorsystems als ein Näherungssensor. Alternativ oder in Kombination kann das vorstehend beschriebenen Sensorsystem für ein Erfassen und/oder Steuern von Verkehrsströmen von Objekten verwendet werden, welche sich durch eine Szene des Sensorsystems bewegen, wobei die Szene durch einen räumlichen Erfassungsbereich des Sensorsystems bestimmt ist.

Ein solcher Näherungssensor, welcher beispielsweise in einem mobilen Gerät zum Einsatz kommen kann, kann durch eine geeignete Bildauswertung durch die Datenverarbeitungseinrichtung (die Art der) Objekte erkennen. Ferner können durch geeignete Fokuseinstellungen des Objektivs unterschiedliche Auslösedistanzen eingestellt werden, so dass der Näherungssensor (beispielsweise einem angeschlossenen System) zuverlässig meldet, wenn sich ein (bestimmtes) Objekt in den durch die betreffende Auslösedistanz definierten räumlichen Bereich eindringt.

Der beschriebenen Verwendung in Zusammenhang mit Verkehrsströmen liegt die Erkenntnis zugrunde, dass es bei einer Verkehrserfassung und/oder Verkehrsstromlenkung auf eine energieeffiziente Sensorik ankommt, da diese Sensorik typischerweise ständig in Betrieb ist und darüber hinaus insbesondere bei größeren Verkehrsströmen typischerweise eine sehr hohe Anzahl derartiger Sensorsysteme im Einsatz sind. Die für den betreffenden Verkehrsstrom relevanten Objekte können beispielsweise Personen, Fahrzeuge, Produkte wie z.B. Pakete, Koffer, etc. sein. Da für derartige Anwendungen üblicherweise eine Mehrzahl oder gar eine Vielzahl von 3D Sensoren einsetzt werden, wirken sich hier Energieeinsparungen besonders positiv aus.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen oder mit Verwendungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

### Kurze Beschreibung der Zeichnung

- Figur 1: zeigt einen Tiefenschärfebereich eines Sensorsystems.
- Figur 2: zeigt das Sensorsystem aus Figur 1 mit drei unterschiedlich eingestellten Tiefenschärfenbereichen zum Bestimmen des Abstandes zu einem Objekt
- Figur 3: zeigt ein Sensorsystem mit mehreren parallelen Abbildungssystemen.
- Figur 4: zeigt die Verwendung eines Sensorsystems und zum abstandsabhängigen Steuern einer Bedeckungscharakteristik einer Öffnung.
- Figur 5a: und 5b illustrieren ein Zusammenfassen von Einzelpixeln eines Sensorchips zu einem übergeordneten Pixel mit einer höheren Photonenakkumulation.
- Figur 6a: und 6b zeigen verschiedenen Ausführungsformen eines Sensorchips für den in Figur 1 dargestellten Lichtempfänger.
- Figur 7: zeigt die Verwendung eines Sensorsystems zum Erfassen eines Verkehrsflusses von auf einem Förderband transportierten Objekten.
- Figur 8: zeigt eine auf ein Objekt projizierte strukturierte Beleuchtung in Form eines rechtwinkligen Rasters.
- Figur 9: zeigt ein als Smartphone ausgebildetes mobiles Gerät mit einem Sensorsystem.

### Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

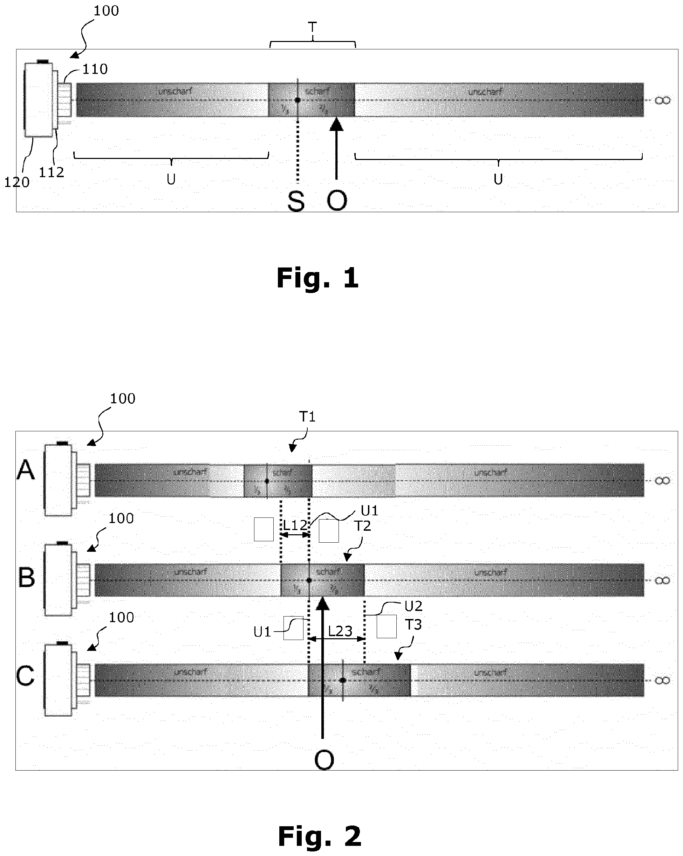

**Figur 1** zeigt zur Verdeutlichung einiger physikalisch optischer Grundsätze eine schematische Darstellung eines Sensorsystems 100 gemäß einem Ausführungsbeispiel der Erfindung. Das Sensorsystem 100 weist ein Objektiv 110 sowie einen Lichtempfänger 120 auf, auf welchem ein Bild eines nicht dargestellten Objekts erzeugt wird, welches sich an einem mit dem Bezugszeichen O gekennzeichneten Objektabstand befindet. Das Objektiv 100 hat optisch abbildende Eigenschaften, welche insbesondere durch seine Fokuseinstellung, seine Brennweite und die Größe seiner Blendenöffnung bestimmt sind. Es ergibt sich ein Tiefenschärfebereich T, in welchem ein Abstand S mit der größten Abbildungsschärfe liegt. Die Abstandsbereiche außerhalb des Tiefenschärfebereiches T sind in Figur 1 mit dem Bezugszeichen U gekennzeichnet.

Gemäß dem hier dargestellten Ausführungsbeispiel ist das Objektiv 110 ein sogenanntes telezentrisches Objektiv 110, welches eine variable Fokuslänge aufweist. Der Fokus des Objektivs 110 und damit insbesondere der Abstand des Tiefenschärfebereiches T von dem Sensorsystem 100 kann mittels einer Fokussierungseinrichtung 112 verstellt werden.

**Figur 2** zeigt das Sensorsystem 100 mit drei unterschiedlich eingestellten Tiefenschärfebereichen zum Bestimmen des Abstandes zu einem Objekt. Bei einer ersten Fokuseinstellung ergibt sich ein Tiefenschärfebereich T1, welcher sich relativ nahe an dem Sensorsystem 100 befindet. Bei einer zweiten Fokuseinstellung ergibt sich ein etwas weiter von dem Sensorsystem 100 beabstandeter Tiefenschärfebereich T2. Bei einer dritten Fokuseinstellung ergibt sich ein noch weiter von dem Sensorsystem 100 beabstandeter

Tiefenschärfebereich T3. Wie aus Figur 2 ersichtlich, nimmt die Länge bzw. die Größe des Tiefenschärfebereichs mit dem Abstand von dem Sensorsystem 100 zu.

Aus einem Vergleich der räumlichen Lagen der beiden Tiefenschärfebereiche T1 und T2 ergibt sich ein Überlappungsbereich, welcher in Figur 2 mit dem Bezugszeichen L12 gekennzeichnet ist. In entsprechender Weise ergibt sich aus einem Vergleich der beiden Tiefenschärfebereiche T2 und T3 ein Überlappungsbereich L23. Dieser Überlappungsbereich L23 wird durch eine erste Distanz U1 und durch eine zweite Distanz U2 begrenzt. Die erste Distanz U1 ist durch ein in Bezug auf das Sensorsystem 100 nahes Ende des Überlappungsbereiches L23 definiert. Die zweite Distanz U2 ist durch ein in Bezug auf das Sensorsystem 100 fernes Ende des Überlappungsbereiches L23 definiert.

Bei dem hier dargestellten Ausführungsbeispiel befindet sich das (nicht dargestellte) Objekt in dem Objektabstand O zu dem Sensorsystem 100. Wie aus Figur 2 ersichtlich, liegt dieser Objektabstand O innerhalb des Tiefenschärfebereiches T2 aber außerhalb des Tiefenschärfebereichs T1. Anders ausgedrückt liegt der Objektabstand O außerhalb des Überlappungsbereiches L12. Dies bedeutet, dass das Objekt bei der Fokuseinstellung mit dem Tiefenschärfebereich T1 unscharf und bei der Fokuseinstellung mit dem Tiefenschärfebereich T2 scharf auf dem Lichtempfänger des Sensorsystems 100 abgebildet wird. Dies bedeutet, dass für das in diesem Dokument beschriebene Verfahren zur Abstandsbestimmung die Fokuseinstellung, welche dem Tiefenschärfebereich T1 zugeordnet ist, nicht verwendet werden kann.

Aus einem Vergleich der beiden Tiefenschärfebereiche T2 und T3 bzw. genauer bei Betrachtung der räumlichen Lage des Überlappungsbereiches L23 ist ersichtlich, dass sich der Objektabstand O sowohl in dem Tiefenschärfebereich T2 als auch in dem Tiefenschärfebereich T3 und damit innerhalb des Überlappungsbereiches L23 befindet. Dies hat zur Folge, dass das (nicht dargestellte) Objekt nicht nur bei der Fokuseinstellung, welche dem Tiefenschärfebereich T2 zugeordnet ist, sondern auch bei der Fokuseinstellung, welche dem Tiefenschärfebereich T3 zugeordnet ist, scharf auf einer lichtsensitiven Oberfläche des Lichtempfängers 120 abgebildet wird. Die beiden Fokuseinstellungen, welche zu den Tiefenschärfebereichen T2 und T3 führen, eignen sich daher, um die Beabstandung des Objekts von dem Sensorsystem 100 bzw. den Objektabstand O zu ermitteln. Dabei ist offensichtlich, dass dieser Objektabstand O zwischen den beiden Distanzen U1 und U2 legt. Für eine besonders genaue Ermittlung des Objektabstandes O können (von einer entsprechend konfigurierten bzw. programmierten Datenverarbeitungseinrichtung) noch Bewertungsfaktoren verwendet werden, welche für den Schärfegrad des jeweiligen Bildes des Objektes bei den betreffenden Fokuseinstellungen indikativ sind.

Bezugnehmend auf die beiden Figuren 1 und 2 wird darauf hingewiesen, dass durch eine Bewertung lediglich einer einzigen Abbildungsschärfe eines Objekts auf dem Lichtempfänger nicht immer festgestellt werden kann, in welcher Richtung in Bezug auf das Sensorsystem sich eine festgestellte Unschärfe gegenüber dem Punkt bzw. dem Abstand S maximaler Schärfe befindet. Dies bedeutet, dass durch eine einfache Schärfemessung nicht festgestellt werden kann, ob sich der (tatsächliche) Objektabstand O links oder rechts vom Abstand S befindet.

Die Lage des Objektabstandes O in Bezug zu dem Abstand S kann jedoch durch eine räumliche Verschachtelung der Tiefenschärfebereiche T1, T2, T2 bestimmt werden. Dabei werden mehrere Bilder des Objekts aufgenommen, wobei sich die zugehörigen (und zueinander unterschiedlichen) Tiefenschärfebereiche räumlich überlappen. Diese Bildaufnahmen können (i) zeitlich gestaffelt mit unterschiedlichen Fokuseinstellungen und damit bei unterschiedlichen Tiefenschärfebereichen oder (ii) zeitlich parallel unter Verwendung von mehreren Bildaufnahmesystemen insbesondere mit jeweils einem Objektiv mit einer spezifischen Fokuseinstellung gemacht werden.

Wenn man in diesem Zusammenhang die Lage des Objektabstandes O in Bezug zu den drei Tiefenschärfebereichen betrachtet, die in Figur 2 dargestellt sind, stellt man fest, dass bei der (mittleren) Bildaufnahme mit dem Tiefenschärfebereich T2 das Objekt am nächsten bei dem "Schärfepunkt" U1 liegt. Ob sich der Objektabstand O jedoch links oder rechts von U1 befindet, lässt sich aufgrund der "mittleren Bildaufnahme" nicht eindeutig aussagen. Wenn nun aber die (obere) Bildaufnahme, welche mit dem Tiefenschärfebereich T1 verknüpft ist, und/oder die (untere) Bildaufnahme, welche mit dem Tiefenschärfebereich T3 verknüpft ist, zur Abstandsbeurteilung hinzugezogen werden, dann lässt sich erkennen, dass das Objekt mit dem Objektabstand O auf der "oberen Bildaufnahme" unscharf und auf der "unteren Bildaufnahme" scharf abgebildet wird. Somit lässt sich mit dem Wissen, welche Tiefenschärfebereiche den verschiedenen Bildaufnahmen zugeordnet sind, auch die Richtungsaussage, dass der Objektabstand O rechts von U1 ist, treffen. Auf diese Weise lässt sich aufgrund von mehreren Aufnahmen mit verschachtelten Tiefenschärfebereichen für alle gesuchten Distanzbereiche innerhalb einer Szene für jedes Objekt eine genaue Abstandsinformation ermitteln.

In diesem Zusammenhang bleibt zu erwähnen, dass Bezeichnung "scharf" oder "unscharf" nur Hilfsbezeichnungen zur Erklärung der in diesem Dokument beschriebenen Erfindung darstellen. Ein reales System arbeitet sinnvollerweise mit einem mehrstufigen Schärfe-Bewertungsfaktor. Die für Kameras verwendete Bezeichnungen "scharf" und "unscharf" bezieht sich im Kontext der Tiefenschärfe darauf, dass die Unschärfe typischerweise nicht mehr als die Größe eines Pixels ist. Bei in diesem Dokument beschriebenen Ausführungsbeispielen der Erfindung wird das Maß, mit dem die erfasste Schärfe von der optimalen Schärfe für den Abstand S abweicht, als eine Distanzinformation in Bezug auf den räumlichen Unterschied zwischen dem tatsächlichen Objektabstand O und dem Abstand S größer Abbildungsschärfe verwendet.

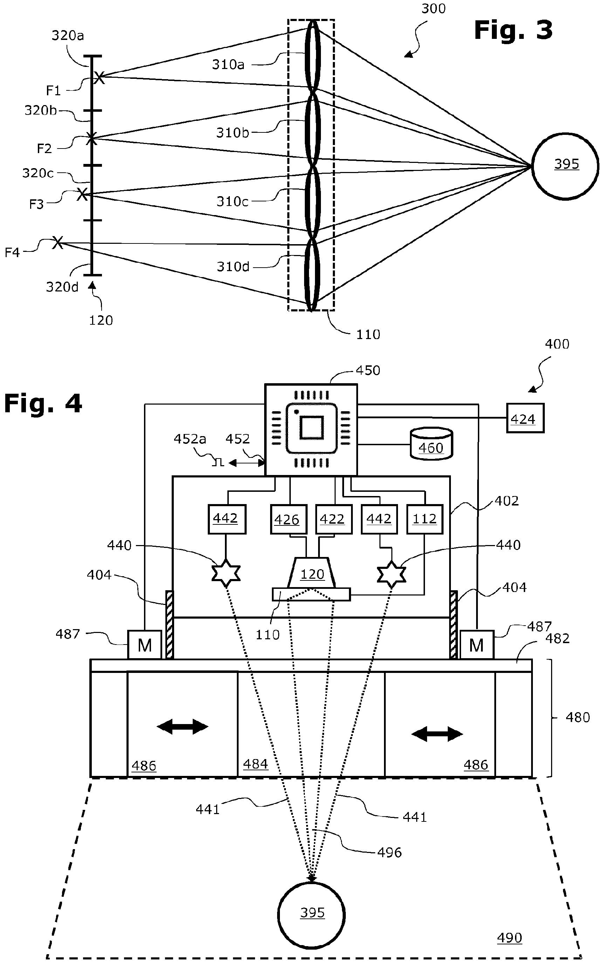

**Figur 3** zeigt ein Sensorsystem 300 mit mehreren parallel geschalteten optischen Abbildungssystemen, mit denen ein und dasselbe Objekt 395 erfasst wird. Gemäß dem hier dargestellten Ausführungsbeispiel weist das Sensorsystem 300 vier Abbildungssysteme auf. Die Objekterfassung erfolgt derart, dass das Objekt 395 mit jedem der Abbildungssysteme auf einen separaten Bereich eines Lichtempfängers 120 abgebildet wird. Diese Bereiche, welche mit den Bezugszeichen 320a, 320b, 320c bzw. 320d gekennzeichnet sind, werden in diesem Dokument als Teil-Lichtempfänger bezeichnet. Die Teil-Lichtempfänger 320a-d können unterschiedliche Teilbereiche einer gemeinsamen Sensorfläche sein. Alternativ können sie mittels unterschiedlicher einzelner Lichtsensoren realisiert sein.

Jedes der insgesamt vier Abbildungssysteme umfasst ein Objektiv. Die insgesamt vier Objektive sind mit den Bezugszeichen 310a, 310b, 310c bzw. 310d gekennzeichnet. Entscheidend bei diesem Ausführungsbeispiel ist, dass die unterschiedlichen Objektive 310a-310d unterschiedliche Fokuseinstellungen haben, denen jeweils ein Fokuspunkt F1, F2, F3 bzw. F4 zugeordnet ist. Diese Fokuspunkte definieren virtuelle Bildebenen, auf denen das Objekt 395 mit maximaler Schärfe abgebildet wird bzw. abgebildet werden würde. Wie aus Figur 3 ersichtlich, befindet sich der Fokuspunkt F1 kurz vor der Bildebene des Teil-Lichtempfängers 320a. Der Fokuspunkt F2 befindet sich genau in der Bildebene des Teil-Lichtempfängers 320b. Der Fokuspunkt F3 befindet sich kurz hinter der Bildebene des Teil-Lichtempfängers 320c und der Fokuspunkt F4 befindet sich deutlich hinter der Bildebene des Teil-Lichtempfängers 320d.

Die in Figur 3 aus Gründen der Übersichtlichkeit nicht dargestellten Tiefenschärfebereiche der jeweiligen Objektive 310a-310d sind bei dem hier dargestellten Ausführungsbeispiel so dimensioniert, dass das Objekt 395 auf den Teil-Lichtempfängern 320a, 320b und 320c scharf bzw. mit einer gewissen Mindestschärfe, die durch einen bestimmten Schärfe-Bewertungsfaktor definiert ist, abgebildet werden. Für die Abstandsbestimmung des Objektivs 395 zu dem Sensorsystem 300 werden dann basierend auf dem vorstehend erläuterten Prinzip der Abstandsermittlung die Schärfe-Bewertungsfaktoren sowie die räumliche Lagen der Tiefenschärfebereiche, die den Abbildungen durch die Objektive 310a, 310b und 310c zugeordnet sind, verwendet. Es wird darauf hingewiesen, die Objektive 310a-d in einem gemeinsamen Linsensystem zusammengefasst werden können.

**Figur 4** zeigt die Verwendung eines Sensorsystems 400 zum Steuern einer Bedeckungscharakteristik einer Öffnung 484 abhängig von der Charakteristik einer von dem Sensorsystem 400 überwachten Szene 490. Gemäß dem hier dargestellten Ausführungsbeispiel ist die Öffnung 184 eine Eintrittsöffnung für Personen in ein Gebäude oder eine Garageneinfahrt für Kraftfahrzeuge. Die entsprechende Eingangsstruktur ist mit dem Bezugszeichen 480 versehen. Ein in der Szene 490 befindliches Objekt 495 soll eine solche Person oder ein Kraftfahrzeug symbolisieren.

Die Eingangsstruktur 480 umfasst eine stationäre Haltestruktur 482, welche einen Rahmen sowie eine Führung für zwei als Schiebetüren ausgebildete Verschließkörper 486 darstellt. Die Schiebetüren 486 können jeweils mittels eines Motors 487 entlang der durch zwei dicke Doppelpfeile dargestellten Verschieberichtungen bewegt werden. Die Ansteuerung der Motoren 487 erfolgt, wie im Folgenden dargelegt, mittels des in diesem Dokument beschriebenen Sensorsystems 400.

Das Sensorsystem 400 weist ein Sensormodul 402 auf. Das Sensormodul 402 wiederum weist einen Lichtempfänger 120 sowie ein Objektiv 110 auf, mittels welchem die gesamte Szene 490 und damit auch ein in der Szene 490 befindliches Objekt 395 auf eine lichtsensitive Fläche des Lichtempfängers 120 wird. Das entsprechende von dem Lichtempfänger 120 empfangene Messlicht ist in Figur 4 mit dem Bezugszeichen 496 versehen. Um die Szene 490 (optional) zu erhellen, weist das Sensormodul 402 ferner eine Beleuchtungseinrichtung 440 auf, welche gemäß dem hier dargestellten Ausführungsbeispiel zwei Beleuchtungseinheiten umfasst, welche die Szene und damit auch das Objekt 395 aus unterschiedlichen Richtungen beleuchten. Das entsprechende Beleuchtungslicht ist mit dem Bezugszeichen 441 versehen.

In der in Figur 4 dargestellten Architektur des Sensorsystems 400 weist das Sensormodul 402 neben den genannten optischen bzw. opto-elektronischen Komponenten 110, 120 und 440 mehrere als Funktionsblöcke dargestellte Komponenten auf, die mittels Hardware, Software oder einer Kombination von Hardware und Software realisiert werden können. Diese Komponenten sind zunächst eine dem Lichtempfänger 120 nachgeschaltete Schärfe-Bewertungseinheit 422, welche die Schärfe des Bildes des Objekts 395 auf dem Lichtempfänger mittels Schärfe-Bewertungsfaktoren bewerten. Die Schärfe-Bewertungseinheit 422 übergibt die für unterschiedliche Fokuseinstellungen ermittelten Schärfe-Bewertungsfaktoren an die Datenverarbeitungseinrichtung 450, welche diese basierend auf dem anhand der Figuren 1 und 2 erläuterten Prinzip dafür verwendet, den Abstand zwischen dem Objekt 395 und dem Sensorsystem 400 bzw. dem Lichtempfänger 120 zu ermitteln. Eine optionale der Datenverarbeitungseinrichtung nachgeschaltete Schärfe-Anzeigeeinrichtung 424 zeigt diese Schärfe-Bewertungsfaktoren oder einen von diesen Schärfe-Bewertungsfaktoren abgeleiteten Zuverlässigkeitswert an, so dass diese von einer Bedienperson abgelesen werden können.

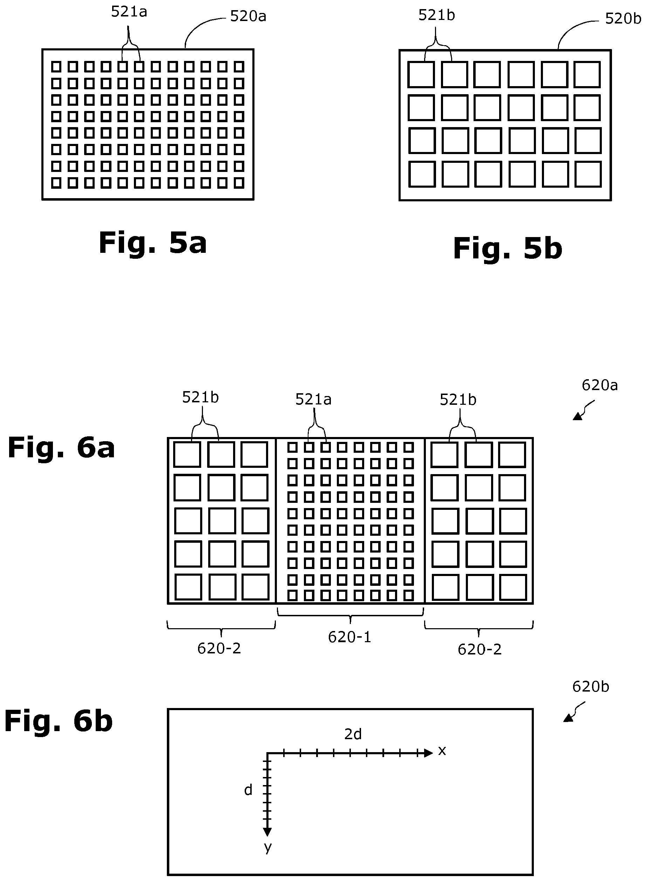

Ferner weist das Sensormodul 402 eine ebenfalls dem Lichtempfänger 120 nachgeschaltete Lichtempfänger-Steuereinrichtung 426 auf, welche den Betrieb des Lichtempfängers 120 steuert. Gemäß dem hier dargestellten Ausführungsbeispiel kann die Lichtempfänger-Steuereinrichtung 426 den Lichtempfänger 120 dazu veranlassen, in einem bestimmten von zumindest zwei unterschiedlichen Betriebsmodi zu arbeiten. In den verschiedenen Betriebsmodi können, beispielsweise veranlasst durch eine vorherige Szenenauswertung mittels der Datenverarbeitungseinrichtung 450, einzelne Pixel eines nicht dargestellten Sensorchips des Lichtempfängers 120 eine unterschiedliche Sensitivität bzw. einen unterschiedlichen Wirkungsgrad in Bezug auf eine Akkumulation von Photonen haben. Auch ein nachstehend anhand der Figuren 5a und 5b beschriebenes szenenabhängiges Zusammenfassen von Pixeln des Lichtempfängers 120 kann von der Lichtempfänger-Steuereinrichtung 426 veranlasst bzw. gesteuert werden.

Außerdem weist das Sensormodul 402 eine Fokussierungseinrichtung 112 auf, welche mit dem Objektiv 110 und mit der Datenverarbeitungseinrichtung 450 verbunden ist. Die Fokussierungseinrichtung 112 übermittelt an die Datenverarbeitungseinrichtung 450 Informationen bezüglich der Fokussierungseinstellung sowie der entsprechenden Tiefenschärfebereiche des Objektivs 110. Auch diese Informationen werden gemäß dem vorstehend anhand der Figuren 1 und 2 erläuterten Prinzip der Abstandsmessung von der Datenverarbeitungseinrichtung 450 verarbeitet.

Gemäß dem hier dargestellten Ausführungsbeispiel beleuchtet die Beleuchtungseinrichtung 440, welche beispielsweise ein Array von individuell ansteuerbaren Laser- oder Leuchtdioden sein kann, die Szene 490 und damit auch das in der Szene 490 befindliche Objekt 395 mit Beleuchtungslicht 441, welches eine vom Raumwinkel abhängige Intensität aufweist. Eine aus Gründen der Übersicht mittels zweier Funktionsblöcke dargestellte Beleuchtungslicht-Steuereinrichtung 442 ist konfiguriert, die Beleuchtungseinrichtung 440 derart anzusteuern, dass eine Charakteristik des Beleuchtungslichts 441, welche die Abhängigkeit der Beleuchtungsintensität des Beleuchtungslichts 441 von dem Raumwinkel (bzw. eines Teilbereiches der Szene 490) beschreibt, während eines Betriebes des Sensorsystems 400 dynamisch veränderbar ist.

Die raumwinkelabhängige Intensitätsverteilung des Beleuchtungslichts 441 ist in Figur 4 aus Gründen der Übersichtlichkeit nicht dargestellt. Um eine möglichst gleichmäßige Verteilung der Intensität des von dem Lichtempfänger 120 erfassten Messlichts 496 zu erreichen, werden gemäß dem hier dargestellten Ausführungsbeispiel diejenigen Raumwinkel der Szene 490, welcher einer größeren Messdistanz zugeordnet sind, stärker beleuchtet als andere Raumwinkel, welche einer geringeren Messdistanz zugeordnet sind. Dies führt im Ergebnis dazu, dass unabhängig von den Abstand potentieller Objekte von dem Sensorsystem 400 die Objekte zumindest annähernd gleich hell beleuchtet werden.

Die Beleuchtungslicht-Steuereinrichtung 442 kann optional die Charakteristik des Beleuchtungslichts 441 auch in Bezug weitere (nicht räumliche) Eigenschaften des Beleuchtungslichts 441 modifizieren, beispielsweise dessen (a) Wellenlänge, (b) spektrale Intensitätsverteilung, (c) Polarisationsrichtung, und (d) Intensitätsverteilung für unterschiedliche Polarisationsrichtungen. Diese weiteren Eigenschaften können dabei derart ausgewählt sein, dass sie zu einer möglichst zuverlässigen und genauen dreidimensionalen Objekterkennung bzw. Objekt-Abstandsermittlung beitragen. Hier kann optional ein "a priori Wissen" über optische Eigenschaften des Objekts 395 berücksichtigt werden.

Es wird darauf hingewiesen, dass die Beleuchtungseinrichtung neben den in Figur 4 dargestellten Beleuchtungseinheiten 440 auch noch andere Beleuchtungseinheiten aufweisen kann, welche die Szene 490 aus einem anderen Winkel beleuchten. Dadurch können ggf. Abschattungsprobleme durch andere Objekte in Bezug auf das Beleuchtungslicht vermieden werden.

Gemäß dem hier dargestellten Ausführungsbeispiel wird basierend auf Abstandsdaten bzw. 3D Daten die erfasste Szene 490 mit der Datenverarbeitungseinrichtung 450 unter Verwendung von geeigneten Methoden der Bildauswertung ausgewertet. Dazu können mehrere Bilder, welche von der Szene 490 unter unterschiedlichen Beleuchtungsbedingungen bzw. unterschiedlichen Beleuchtungscharakteristika aufgenommen wurden, gemeinsam verwendet werden.

Ein an die Datenverarbeitungseinrichtung 450 über eine Schnittstelle 452 der Datenverarbeitungseinrichtung 450 übergebenes externes Steuersignal 452a kann dazu verwendet werden, den Betrieb der Datenverarbeitungseinrichtung 450 zumindest teilweise von externen Informationen abhängig zu machen. Insbesondere kann über das Steuersignal 452a ein "a priori Wissen" über ein Objekt 495 für eine verbesserte Auswertung der erfassten Szene 490 und insbesondere für eine besonders zuverlässige Abstandsermittlung in Bezug auf das Objekt 395 übermittelt werden.

Gemäß dem hier dargestellten Ausführungsbeispiel ist das Sensorsystem 400 in der Lage, eine Objekterkennung vorzunehmen. Dazu greift die Datenverarbeitungseinrichtung 450 auf einen in einer Datenbank 460 abgelegten Datensatz von Referenzobjekten zu, welche ausgewählten Objekten entsprechen, die autorisiert sind, die Öffnung 484 zu passieren. Dies bedeutet, dass bei einer geeigneten Annäherung des Objekts 495 an den Eingang 484 die Schiebetüren 486 lediglich dann geöffnet werden, wenn das erfasste Objekt 495 zumindest annähernd mit einem der hinterlegten Referenzobjekte übereinstimmt. Dies bedeutet anschaulich, dass bei der hier beschriebenen Verwendung des Sensorsystems 400 die Bedeckungscharakteristik der Öffnung 484 auch noch von dem Ergebnis einer objektbasierten Zugangskontrolle abhängt.

Mittels einer Halterung 404 ist zumindest das Sensormodul 402 an der stationären Haltestruktur 482 in mechanisch stabiler und räumlich fester Weise angebracht. Bevorzugt ist das ganze Sensorsystem 400 (im Gegensatz zu der Darstellung von Figur 1) als eine Anordnung aufgebaut, welche innerhalb einer kompakten Bauweise neben dem Sensormodul 402 auch noch (zumindest) die Datenverarbeitungseinrichtung 450 sowie die Datenbank 460 aufweist.

Die **Figuren 5a und 5b** illustrieren ein Zusammenfassen von Einzelpixeln eines als ein Halbleiter- bzw. CCD Chip ausgebildeten Lichtempfängers 520a bzw. 520b. Der Lichtempfänger 520a weist eine Vielzahl von lichtsensitiven bzw. Photonen sammelnden Pixeln 521a auf. Gemäß dem hier dargestellten Ausführungsbeispiel sind die Pixel 521a der vollen räumlichen Auflösung des Lichtempfängers 520a zugeordnet, welche Auflösung durch die Halbleiter-Architektur des Chips 520a vorgegeben ist.

Bei dem Lichtempfänger 520b sind jeweils vier der lichtsensitiven Pixel (für eine volle Auflösung) zu einem übergeordneten Pixel 521b (für eine erhöhte Photonenakkumulation pro Pixel auf Kosten einer reduzierten räumlichen Auflösung) zusammengefasst. Anschaulich ausgedrückt sammelt ein Pixel 521b im Vergleich zu einem einzelnen Pixel 521a eine vierfache Menge an Licht auf. Ein solches Zusammenfassen (Englisch "Binning") von Pixeln reduziert die erforderliche (Mindest)Intensität des erfassten Messlichts, welche zum Auswerten des Bildes des Objekts bzw. der Szene benötigt wird. Da die Intensität des Messlichts unmittelbar von der Intensität des Beleuchtungslichts abhängt, kann durch das "Binning" die Intensität des Beleuchtungslichts reduziert und damit der Energieverbrauch des Sensorsystems verringert werden.

Das beschriebene "Binning" kann auch dynamisch durch eine entsprechende Ansteuerung ein und desselben Lichtempfängers 520a bzw. 520b realisiert werden. Dabei wird der Lichtempfänger entweder in einem ersten Betriebsmodus (mit voller Auflösung) oder in einem zweiten Betriebsmodus (mit Photonen sammelnden zusammengefassten Pixeln) betrieben. Ein Umschalten zwischen verschiedenen Betriebsmodi kann von externen Steuersignalen gesteuert werden. Alternativ oder in Kombination kann ein solches Umschalten auch von dem Ergebnis einer Objekterfassung bzw. Szenenauswertung abhängen, so dass der "Binning" Betriebsmodus für eine nächste Szenenerfassung geregelt wird.

Es wird darauf hingewiesen, dass auch mehr als zwei unterschiedliche Betriebsmodi mit jeweils einer unterschiedlich starken Zusammenfassung von Pixeln zum Einsatz kommen können. Ferner ist es möglich, in unterschiedlichen Teilbereichen des Lichtempfängers jeweils eine unterschiedliche Anzahl von Einzelpixeln zu einem übergeordneten Pixel zusammenzufassen. Dann können einzelne Teilbereiche der Szene mit einer höheren räumlichen Auflösung (und einer geringeren Photonenakkumulation) und andere Teilbereich der Szene mit einer niedrigeren räumlichen Auflösung (und einer höheren Photonenakkumulation) erfasst werden. Das beschriebene lokale und unterschiedlich starke Zusammenfassen von Pixeln kann dynamisch bzw. adaptiv in genau den Teilbereichen durchgeführt werden kann, in denen sich gerade ein bestimmtes Objekt befindet.

Die Figuren 6a und 6b zeigen verschiedenen Ausführungsformen eines Lichtempfängers, mit denen jeweils eine mehr oder weniger starke Energieeinsparung bei der Erfassung einer Szene realisiert werden kann.

**Figur 6a** zeigt einen Lichtempfänger 620a, dessen lichtsensitive Oberfläche in unterschiedlichen Teilbereichen bzw. Sensorbereichen eine unterschiedliche räumliche (Pixel)Auflösung aufweist. Gemäß dem hier dargestellten Ausführungsbeispiel weist die lichtsensitive Oberfläche drei unterschiedliche Sensorbereiche 620-1 und 620-2 auf. Dem ersten Sensorbereiche 620-1 ist eine erste Pixelkonfiguration zugeordnet. Dem zweiten Sensorbereiche 620-2 ist eine zweite Pixelkonfiguration zugeordnet. In dem ersten Sensorbereich bzw. der ersten Pixelkonfiguration 620-1 ist die räumliche Dichte der lichtsensitiven Pixel 521a so hoch, wie es die Halbleiter-Architektur des Sensorchips erlaubt. In den beiden Sensorbereichen 620-2 bzw. der zweiten Pixelkonfiguration sind jeweils vier der lichtsensitiven Pixel (für eine volle Auflösung) zu einem übergeordneten Pixel 521b (für eine reduzierte Auflösung und erhöhte Photonenakkumulation pro Pixel) zusammengefasst, sodass dieser eine im Vergleich zu einem einzelnen Pixel 521a eine vierfache Menge an Licht aufgesammelt. Dadurch wird die Lichtsensitivität des Sensorbereiches 620-2 (auf Kosten der räumlichen Auflösung) erhöht. Durch ein solches Zusammenfassen (Englisch "Binning") wird die Energie reduziert, welche zum Auswerten des entsprechenden Bildbereiches der Szene benötigt wird. Eine weitere vermutlich noch stärkere Möglichkeit der Energieeinsparung ergibt sich dadurch, dass im Falle einer Beleuchtung durch die vorstehend beschriebene Beleuchtungseinrichtung die entsprechenden Bildbereiche der Szene weniger stark oder eventuell sogar gar nicht beleuchtet werden müssen.

Es wird darauf hingewiesen, dass eine solche ungleiche räumliche Auflösung dann nicht zu einer reduzierten Erkennungssicherheit eines Objekts führt, wenn die Teilbereiche der Szene, in welchen sich das Objekt befindet, mit der vollen Auflösung erfasst werden, und andere Teilbereiche der Szene, insbesondere Hintergründe, mit der niedrigen Auflösung erfasst werden. Es wird ferner darauf hingewiesen, dass das beschriebene Zusammenfassen von Pixeln bei manchen Sensorchips auch dynamisch bzw. adaptiv in genau den Teilbereichen durchgeführt werden kann, in denen sich gerade das Objekt befindet. In Falle einer nicht adaptiven Zusammenfassung von Pixeln können die verschiedenen Sensorbereiche auch mittels unterschiedlichen Sensorchips realisiert werden. Dies hat den Vorteil, dass die Kosten für die unterschiedlichen Sensorchips niedriger sein können als ein solcher Sensorchip mit einer adaptiv einstellbaren räumlichen Auflösung.

**Figur 6b** zeigt einen Lichtempfänger 620b, welcher entlang unterschiedlicher Koordinatenrichtungen eine unterschiedliche räumliche Auflösung aufweist. Eine solche asymmetrische Auflösung kann durch ein Zusammenfassen von Pixeln erfolgen, wobei entlang der einen Richtung eine geringere Anzahl an Pixeln zusammengefasst wird als entlang der anderen Richtung. Dabei kann die geringere Anzahl auch eins sein, d. h. es findet kein Zusammenfassen von Pixel statt. Auch hier kann die Anzahl an Pixel, die zusammengefasst werden, von der Datenverarbeitungseinrichtung adaptiv unabhängig von den bisherigen bzw. zu erwartenden Objektpositionen eingestellt werden.

Gemäß dem dargestellten Ausführungsbeispiel ist die Auflösung entlang einer y-Richtung die volle Auflösung, welche der Sensorchip des Lichtempfängers 620b ermöglicht. Diese Auflösung entspricht der Beabstandung zweier Pixel entlang der y-Richtung und ist in Figur 6b mit "d" bezeichnet. Im Gegensatz dazu ist die Auflösung entlang der x-Richtung nur halb so hoch, weil jeweils zwei einzelne Pixel zu einem übergeordneten Pixel zusammengefasst wurden. Die Auflösung entlang der x-Richtung entspricht damit dem doppelten Abstand zwischen zwei benachbarten einzelnen Pixeln und ist in Figur 6b mit "2d" bezeichnet.

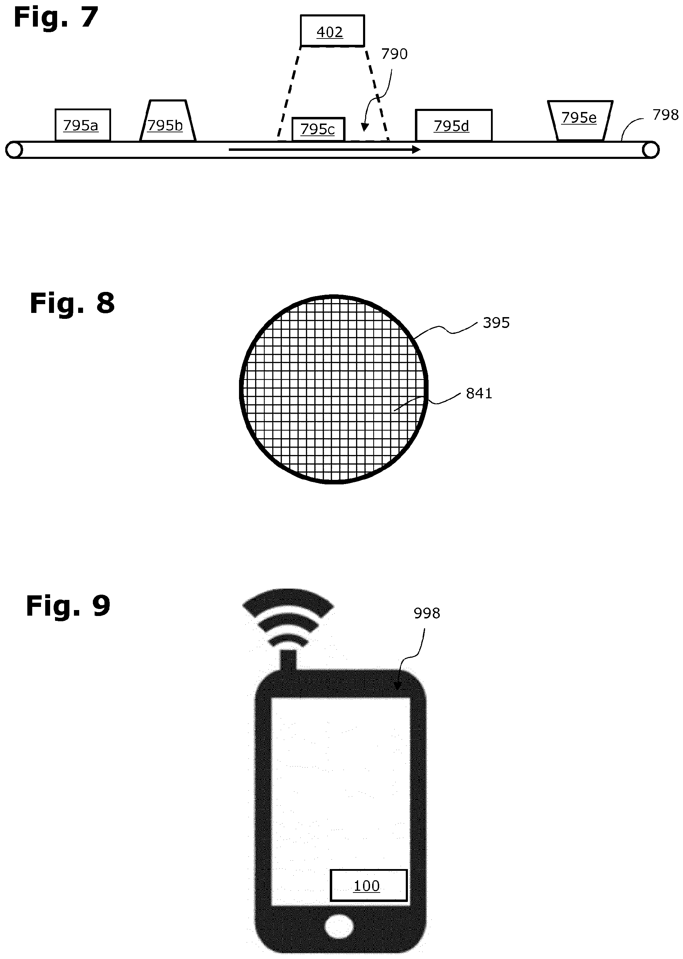

**Figur 7** zeigt eine weitere Verwendung bzw. einen weiteren Einsatz des Sensorsystems 100. Aus Gründen der Übersichtlichkeit ist in Figur 7 lediglich das Sensormodul 402 des Sensorsystems dargestellt.

Gemäß dem hier dargestellten Ausführungsbeispiel erfasst das Sensormodul 402 einen Verkehrsfluss von (verschiedenen) Objekten 795a, 795b, 795c, 795d und 795e, welche sich auf einem Förderband 798 befinden und entlang der durch einen Pfeil dargestellten Bewegungsrichtung durch eine Szene 790 hindurch bewegen. Eine zuverlässige Kenntnis der Anzahl und/oder der Art der Objekte 795a - 795e kann im Bereich der Logistik für eine Steuerung des Verkehrsflusses verwendet werden. Lediglich ein Beispiel für eine solche Steuerung eines Verkehrsfluss ist die Steuerung des Gepäcktransportes in einem Flughafen. Dabei können auch Etiketten auf den betreffenden Objekten 795a - 795e die Art des jeweiligen Objektes bestimmen. Es wird jedoch darauf hingewiesen, dass der Einsatz in einem Flughafen lediglich ein Beispiel von einer Vielzahl von anderen Anwendungsmöglichkeiten auf dem Gebiet der Verkehrsteuerung ist.

**Figur 8** zeigt eine auf ein Objekt 395 projizierte strukturierte Beleuchtung 841, welche dem Objekt 395 einen (zusätzlichen) Kontrast verleiht, so dass die Schärfe eines Bildes des Objekts 395 genau und eindeutig berechnet werden kann. Gemäß dem hier dargestellten Ausführungsbeispiel hat die strukturierte Beleuchtung 841 die Struktur bzw. die Form eines rechtwinkligen Rasters.

Es wird darauf hingewiesen, dass es bei Objekten, die eine dreidimensional gekrümmte Oberfläche bzw. Oberflächenkontur aufweisen, bei einer schrägen Beleuchtung zu einer Verzerrung der projizierten Beleuchtungsstrukturen kommt. Optional kann eine solche Verzerrung in bekannter Weise dazu verwendet werden, die 3D Oberflächenkontur des Objekts zu bestimmen.

**Figur 9** zeigt ein als Smartphone 998 ausgebildetes mobiles Gerät mit einem Sensorsystem 100 gemäß einem Ausführungsbeispiel der Erfindung. Für das Sensorsystem 100 kann eine bei bekannten Geräten ohnehin vorhandene Kamera verwendet werden.

Es wird angemerkt, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

### BEZUGSZEICHEN:

- 100: Sensorsystem (ohne Beleuchtung)
- 110: Objektiv
- 112: Fokussierungseinrichtung
- 120: Lichtempfänger
- O: Objektabstand
- S: Abstand größer Abbildungsschärfe
- T: Tiefenschärfebereich
- U: Unschärfebereiche

- T1/T2/T3: Tiefenschärfebereiche
- L12/L23: Überlappungsbereiche
- U1: erste Distanz / nahes Ende des Überlappungsbereiches
- U2: zweite Distanz / fernes Ende des Überlappungsbereiches

- 300: Sensorsystem (mit mehreren parallelen Abbildungssystemen)
- 310a-d: Teil-Objektiv
- 320a-d: Teil-Lichtempfänger
- 395: Objekt
- F1-F4: Fokuspunkte

- 400: Sensorsystem (mit Beleuchtung)
- 402: Sensormodul
- 404: Halterung
- 422: Schärfe-Bewertungseinheit
- 424: Schärfe-Anzeigeeinrichtung
- 426: Lichtempfänger-Steuereinrichtung
- 440: Beleuchtungseinrichtung
- 441: Beleuchtungslicht
- 442: Beleuchtungslicht-Steuereinrichtung
- 450: Datenverarbeitungseinrichtung
- 452: Schnittstelle
- 452a: externes Steuersignal
- 460: Datenbank
- 480: Eingangsstruktur
- 482: stationäre Haltestruktur
- 484: Öffnung / Eingang
- 486: Verschließkörper / Schiebetür
- 487: Motor
- 490: Szene
- 496: Messlicht

- 520a: Lichtempfänger (mit maximaller Auflösung)
- 520b: Lichtempfänger (mit zusammengefassten Pixeln)
- 521a: Pixel
- 521b: übergeordnetes Pixel / zusammengefasstes Pixel

- 620a/b: Lichtempfänger
- 620-1: erster Sensorbereich / erste Pixelkonfiguration
- 620-2: zweiter Sensorbereich / zweite Pixelkonfiguration

- 790: Szene
- 795a-e: Objekte
- 798: Förderband

- 841: strukturierte Beleuchtung

- 998: Mobiles Gerät

## Patentansprüche

1. Verfahren zum optischen Ermitteln eines Abstands (O) zwischen (i) einem Sensorsystem (100) aufweisend einen Lichtempfänger (120) und ein Objektiv (110) und (ii) einem Objekt (395), welches sich in einer Szene (490) befindet, das Verfahren aufweisend
Erzeugen eines scharfen ersten Bildes des Objekts (395) auf dem Lichtempfänger (120) bei einer ersten Fokuseinstellung des Objektivs (110), wobei der ersten Fokuseinstellung ein erster Tiefenschärfebereich (T2) zugeordnet ist;
Erzeugen eines scharfen zweiten Bildes des Objekts (395) auf dem Lichtempfänger (120) bei einer zweiten Fokuseinstellung, wobei der zweiten Fokuseinstellung ein zweiter Tiefenschärfebereich (T3) zugeordnet ist; wobei der zweite Tiefenschärfebereich (T3) und der erste Tiefenschärfebereich (T2) unterschiedlich sind und die beiden Tiefenschärfebereiche (T2, T3) sich in einem Überlappungsbereich (L23) räumlich überlappen; und
Berechnen, basierend auf der ersten Fokuseinstellung und der zweiten Fokuseinstellung,
(a) einer ersten Distanz (U1) zwischen dem Sensorsystem (100) und einem in Bezug auf des Sensorsystem (100) nahen Ende des Überlappungsbereiches (L23) und
(b) einer zweiten Distanz (U2) zwischen dem Sensorsystem (100) und einem in Bezug auf das Sensorsystem (100) fernen Ende des Überlappungsbereiches (L23); und
Ermitteln des Abstands (O) basierend auf der ersten Distanz (U1) und der zweiten Distanz (U2), wobei der ermittelte Abstand (O) zwischen der ersten Distanz (U1) und der zweiten Distanz (U2) liegt;
**dadurch gekennzeichnet, dass** das Verfahren ferner aufweist
Bewerten des scharfen ersten Bildes mit einem ersten Schärfe-Bewertungsfaktor und ein Bewerten des scharfen zweiten Bildes mit einem zweiten Schärfe-Bewertungsfaktor;
wobei das Ermitteln des Abstandes (O) ferner auf dem ersten Schärfe-Bewertungsfaktor und/oder auf dem zweiten Schärfe-Bewertungsfaktor basiert.

2. Verfahren gemäß dem vorangehenden Anspruch, aufweisend zumindest eines der folgenden Merkmale:
(A1) Das Verfahren weist ferner auf ein Kalibrieren des Objektivs (110) in Bezug auf die erste Fokuseinstellung, wobei
(a) ein in einem vorbestimmten ersten Abstand von dem Sensorsystem (100) angeordnetes erstes Referenzobjekt bei verschiedenen ersten Test-Fokuseinstellungen auf dem Lichtempfänger (120) abgebildet wird;
(b) für jede erste Test-Fokuseinstellung ein Schärfegrad der Abbildung bestimmt wird und
(c) diejenige erste Test-Fokuseinstellung, welche mit dem höchsten Schärfegrad verknüpft ist, als die kalibrierte erste Fokuseinstellung verwendet wird; und/oder Kalibrieren des Objektivs (110) in Bezug auf die zweite Fokuseinstellung,
wobei
(a) ein in einem vorbestimmten zweiten Abstand von dem Sensorsystem (100) angeordnetes zweites Referenzobjekt bei verschiedenen zweiten Test-Fokuseinstellungen auf dem Lichtempfänger (120) abgebildet wird;
(b) für jede zweite Test-Fokuseinstellung ein Schärfegrad der Abbildung bestimmt wird und
(c) diejenige zweite Test-Fokuseinstellung, welche mit dem höchsten Schärfegrad verknüpft ist, als die kalibrierte zweite Fokuseinstellung verwendet wird;
(A2) Das Verfahren weist ferner auf
ein Erzeugen eines scharfen dritten Bildes des Objekts (395) auf dem Lichtempfänger (120) bei einer dritten Fokuseinstellung des Objektivs (110),
wobei der dritten Fokuseinstellung ein dritter Tiefenschärfebereich zugeordnet ist und der dritte Tiefenschärfebereich unterschiedlich ist sowohl zu dem zweiten Tiefenschärfebereich als auch zu dem ersten Tiefenschärfebereich und wobei
gemäß einer ersten Alternative sich alle Tiefenschärfebereiche in dem Überlappungsbereich räumlich überlappen oder
gemäß einer zweiten Alternative der dritte Tiefenschärfebereich und der zweite Tiefenschärfebereich sich in einem weiteren Überlappungsbereich räumlich überlappen, wobei das Verfahren ferner aufweist
ein Berechnen, basierend auf der zweiten Fokuseinstellung und der dritten Fokuseinstellung, (a) einer weiteren ersten Distanz zwischen dem Sensorsystem und einem in Bezug auf des Sensorsystem weiteren nahen Ende des weiteren Überlappungsbereiches und (b) einer weiteren zweiten Distanz zwischen dem Sensorsystem und einem in Bezug auf das Sensorsystem weiteren fernen Ende des weiteren Überlappungsbereiches; wobei der Abstand ferner basierend auf der weiteren ersten Distanz und der weiteren zweiten Distanz ermittelt wird.

3. Verfahren gemäß einem der vorangehenden Ansprüche, wobei
(B1) die Fokuseinstellung des Objektivs (110) kontinuierlich variiert wird und bei unterschiedlichen Fokuseinstellungen mit jeweils einem unterschiedlichen Tiefenschärfebereich eine Mehrzahl von Bildern des Objekts (395) auf dem Lichtempfänger (120) erzeugt werden, wobei zum Berechnen des Abstandes (O) zumindest zwei der Bilder und die jeweils zugehörigen Fokuseinstellungen und Tiefenschärfebereiche (T2, T3) verwendet werden; und/oder wobei
(B2) das erste scharfe Bild und/oder das zweite scharfe Bild in einem spektralen Wellenlängenbereich erzeugt werden, welcher sichtbares Licht und/oder infrarotes Licht umfasst.

4. Verfahren gemäß einem der vorangehenden Ansprüche, wobei das Objekt (395) optisch erkennbare Strukturen (841) für eine Kontrasterhöhung aufweist, anhand welcher beurteilt wird, ob ein von dem Lichtempfänger (120) aufgenommenes Bild scharf ist und damit als erstes Bild bzw. als zweites Bild verwendbar ist;
wobei insbesondere das Verfahren ferner aufweist ein Projizieren der optisch erkennbaren Strukturen (841) auf das Objekt (395).

5. Verfahren gemäß einem der vorangehenden Ansprüche, ferner aufweisend
Erkennen des Objekts (395) in dem ersten scharfen Bild und/oder in dem zweiten scharfen Bild;
Vergleichen des erkannten Objekts mit zumindest einem in einer Datenbank (460) hinterlegten Vergleichsobjekt; und,
wenn das Objekt (395) innerhalb vorgegebener zulässiger Abweichungen mit einem Vergleichsobjekt übereinstimmt, Identifizieren des Objekts (395) als ein für eine bestimmte Aktion zugelassenes Objekt.

6. Verfahren zum optischen Ermitteln einer Mehrzahl von Abständen zwischen (i) einem Sensorsystem (100) aufweisend einen Lichtempfänger (120) und ein Objektiv (110) und (ii) jeweils einem Objekt (395) von einer Mehrzahl von Objekten, die sich in einer Szene befinden, das Verfahren aufweisend
Durchführen des Verfahrens gemäß einem der vorangehenden Ansprüche 1 bis 5 für jedes der Mehrzahl von Objekten, wobei der Lichtempfänger (120) eine Mehrzahl von lichtsensitiven Teilbereichen aufweist und jeweils eines der Mehrzahl von Objekten auf einen Teilbereich der Mehrzahl von lichtsensitiven Teilbereichen scharf abgebildet wird und die zugehörigen Tiefenschärfebereiche für das Ermitteln des jeweiligen Abstandes verwendet werden.

7. Sensorsystem (100) zum Ermitteln eines Abstands (O) zwischen dem Sensorsystem (100) und einem Objekt (395), welches sich in einer Szene (490) befindet, das Sensorsystem (100) aufweisend
einen Lichtempfänger (120);
ein Objektiv (110) zum Abbilden des Objekts (395) auf dem Lichtempfänger (120), wobei
in einer ersten Fokuseinstellung, der ein erster Tiefenschärfebereich (T2) zugeordnet ist, ein erstes scharfes Bild von dem Objekt (395) auf dem Lichtempfänger (120) erzeugbar ist, und
in einer zweiten Fokuseinstellung, der ein zweiter Tiefenschärfebereich (T3) zugeordnet ist, ein zweites scharfes Bild von dem Objekt (395) auf dem Lichtempfänger (120) erzeugbar ist, wobei der zweite Tiefenschärfebereich (T3) und der erste Tiefenschärfebereich (T2) unterschiedlich sind und die beiden Tiefenschärfebereiche (T2, T3) sich in einem Überlappungsbereich (L23) räumlich überlappen;
eine Datenverarbeitungseinrichtung (450), welche dem Lichtempfänger (120) nachgeschaltet ist und welche konfiguriert ist,
um basierend auf der ersten Fokuseinstellung und der zweiten Fokuseinstellung zu berechnen
(i) eine erste Distanz (U1) zwischen dem Sensorsystem (100) und einem in Bezug auf des Sensorsystem (100) nahen Ende des Überlappungsbereiches (L23) und
(ii) eine zweite Distanz (U2) zwischen dem Sensorsystem (100) und einem in Bezug auf das Sensorsystem (100) fernen Ende des Überlappungsbereiches (L23); und
um basierend auf der ersten Distanz (U1) und der zweiten Distanz (U2) den Abstand (O) zu ermitteln, wobei der Abstand (O) zwischen der ersten Distanz (U1) und der zweiten Distanz (U2) liegt; **gekennzeichnet durch**
eine Schärfe-Bewertungseinheit (422), welche dem Lichtempfänger (120) nachgeschaltet ist und welche konfiguriert ist, das erste Bild mit einem ersten Schärfe-Bewertungsfaktor zu bewerten und das zweite Bild mit einem zweiten Schärfe-Bewertungsfaktor zu bewerten und die beiden Schärfe-Bewertungsfaktoren an die Datenverarbeitungseinrichtung (450) zu übergeben, wobei die Datenverarbeitungseinrichtung (450) konfiguriert ist, den Abstand (O) zu ermitteln ferner basierend auf dem ersten Schärfe-Bewertungsfaktor und auf dem zweiten Schärfe-Bewertungsfaktor.

8. Sensorsystem (300) gemäß Anspruch 7, wobei
(C1) der Lichtempfänger (120) einen ersten Teil-Lichtempfänger (320a) und einen zweiten Teil-Lichtempfänger (320b) aufweist und das Objektiv (120) ein erstes Teil-Objektiv (310a) und ein zweites Teil-Objektiv (310b) aufweist, wobei das scharfe erste Bild mit dem ersten Teil-Objektiv (310a) auf den ersten Teil-Lichtempfänger (320a) scharf abgebildet wird und
das scharfe zweite Bild mit dem zweiten Teil-Objektiv (310b) auf den zweiten Teil-Lichtempfänger (320b) scharf abgebildet wird; und/oder wobei
(C2) der Lichtempfänger (120) ein einziger Lichtempfänger ist und das Objektiv (110) ein einziges Objektiv ist.

9. Sensorsystem (400) gemäß einem der Ansprüche 7 bis 8, ferner aufweisend
eine Schärfe-Bewertungseinheit (422), welche dem Lichtempfänger (120) nachgeschaltet ist und welche konfiguriert ist, das erste Bild mit einem ersten Schärfe-Bewertungsfaktor zu bewerten und das zweite Bild mit einem zweiten Schärfe-Bewertungsfaktor zu bewerten und die beiden Schärfe-Bewertungsfaktoren an die Datenverarbeitungseinrichtung (450) zu übergeben,
wobei die Datenverarbeitungseinrichtung (450) konfiguriert ist, den Abstand (O) zu ermitteln ferner basierend auf dem ersten Schärfe-Bewertungsfaktor und auf dem zweiten ersten Schärfe-Bewertungsfaktor;
wobei insbesondere das Sensorsystem (400) zumindest eines der folgenden Merkmale aufweist:
(D1) das Sensorsystem (400) weist ferner auf eine Schärfe-Anzeigeeinrichtung (424), welche der Schärfe-Bewertungseinheit (422) und/oder der Datenverarbeitungseinrichtung (450) nachgeschaltet ist und welche konfiguriert ist, den ersten Schärfe-Bewertungsfaktor und/oder den zweiten Schärfe-Bewertungsfaktor und/oder einen aus den beiden Schärfe-Bewertungsfaktoren abgeleiteten Wert anzuzeigen;
(D2) die Datenverarbeitungseinrichtung (450) ist konfiguriert, optische Umgebungsbedingungen von dem Objekt (395) zu erkennen, welche eine scharfe Abbildung des Objekts (395) auf den Lichtempfänger (120) zumindest erschweren oder verunmöglichen.

10. Sensorsystem (100) gemäß einem der Ansprüche 7 bis 9, wobei das Sensorsystem (400) ferner zumindest eines der folgenden Merkmale aufweist:
(E1) das Objektiv (110) ist ein telezentrisches Objektiv und/oder das Objektiv (110) weist elektrisch verstellbare optische Elemente auf;
(E2) das Sensorsystem (400) weist ferner auf eine mit dem Lichtempfänger (120, 520a, 520b) gekoppelte Lichtempfänger-Steuereinrichtung (426), wobei die Lichtempfänger-Steuereinrichtung (426) und der Lichtempfänger (120) derart konfiguriert sind, dass in einem modifizierten Betrieb des Sensorsystems (400) zumindest zwei Pixel (521a) einer Vielzahl von Pixel (521a) des Lichtempfängers (520b) zu einem übergeordneten Pixel (521b) zusammengefasst sind.

11. Sensorsystem (400) gemäß einem der Ansprüche 7 bis 10, ferner aufweisend
eine Beleuchtungseinrichtung (440) zum Beleuchten der Szene (490) mit einem Beleuchtungslicht (441).

12. Sensorsystem (400) gemäß dem vorangehenden Anspruch, ferner aufweisend zumindest eines der folgenden Merkmale
(F1) eine mit der Beleuchtungseinrichtung (440) gekoppelte Beleuchtungslicht-Steuereinrichtung (442), welche konfiguriert ist, die Beleuchtungseinrichtung (440) derart anzusteuern, dass eine Charakteristik des Beleuchtungslichts (441) während eines Betriebes des Sensorsystems (400) veränderbar ist;
(F2) die Charakteristik des Beleuchtungslichts (441) ist durch zumindest eines der folgenden Merkmale bestimmt:
(a) Wellenlänge;
(b) spektrale Intensitätsverteilung;
(c) Polarisationsrichtung und
(d) Intensitätsverteilung für unterschiedliche Polarisationsrichtungen;
(F3) die Charakteristik des Beleuchtungslichts (441) beschreibt eine Abhängigkeit der Beleuchtungsintensität des Beleuchtungslichts (441) von dem Raumwinkel der zu beleuchtenden Szene (490);
(F4) die Beleuchtungslicht-Steuereinrichtung (442) ist mit der Datenverarbeitungseinrichtung (450) gekoppelt und die Beleuchtungslicht-Steuereinrichtung (442) ist konfiguriert, basierend auf einer Auswertung der dreidimensionalen Charakteristik der Szene (490) durch die Datenverarbeitungseinrichtung (450) die Charakteristik des Beleuchtungslichts (441) zu verändern.

13. Sensorsystem (400) gemäß einem der vorangehenden Ansprüche 7 bis 12, wobei
die Datenverarbeitungseinrichtung (450) ferner derart konfiguriert ist, dass eine Bedeckungscharakteristik einer von dem Objekt (395) zu passierenden Öffnung (484) durch zumindest einen Verschließkörper (486) steuerbar ist.

14. Mobiles Gerät (998) mit einem Sensorsystem gemäß einem der vorangehenden Ansprüche 7 bis 13.

15. Verwendung eines Sensorsystems (100) gemäß einem der vorangehenden Ansprüche 7 bis 14
als Näherungssensor und/oder
für ein Erfassen und/oder Steuern von Verkehrsströmen von Objekten (795a-e), welche sich durch eine Szene (790) des Sensorsystems (100) bewegen, wobei die Szene (790) durch einen räumlichen Erfassungsbereich des Sensorsystems (100) bestimmt ist.

## Claims

1. A method for optically determining a distance (O) between (i) a sensor system (100) comprising a light receiver (120) and an objective lens (110) and (ii) an object (395) located in a scene (490), said method comprising
generating a sharp first image of the object (395) on the light receiver (120) at a first focus setting of the objective lens (110), the first focus setting having a first depth of field range (T2) associated therewith;
generating a sharp second image of the object (395) on the light receiver (120) at a second focus setting, the second focus setting having associated therewith a second depth of field range (T3); wherein
the second depth of field range (T3) and the first depth of field range (T2) are different, and the two depth of field ranges (T2, T3) spatially overlap in an overlap region (L23); and
calculating, based on the first focus setting and the second focus setting, (a) a first distance (U1) between the sensor system (100) and an end of the overlap region (L23) that is close with respect to the sensor system (100); and (b) a second distance (U2) between the sensor system (100) and an end of the overlap region (L23) remote with respect to the sensor system (100); and
determining the distance (O) based on the first distance (U1) and the second distance (U2), wherein the determined distance (O) is between the first distance (U1) and the second distance (U2);
**characterized in that** the method further comprises
evaluating the sharp first image with a first sharpness evaluation factor and evaluating the sharp second image with a second sharpness evaluation factor;
wherein determining the distance (O) is further based on the first sharpness evaluation factor and/or on the second sharpness evaluation factor.

2. The method according to the preceding claim, comprising at least one of the following features:
(A1) the method further comprising calibrating the objective lens (110) with respect to the first focus setting, wherein
(a) imaging a first reference object located at a predetermined first distance from the sensor system (100) at different first test focus settings on the light receiver (120);
(b) for each first test focus setting, a degree of sharpness of the image is determined; and
(c) using the first test focus setting associated with the highest degree of sharpness as the calibrated first focus setting; and/or
calibrating the objective lens (110) with respect to the second focus setting, wherein
(a) imaging a second reference object located at a predetermined second distance from the sensor system (100) at different second test focus settings on the light receiver (120);
(b) for each second test focus setting, a degree of sharpness of the image is determined; and
(c) the second test focus setting associated with the highest degree of sharpness is used as the calibrated second focus setting;
(A2) the method further comprising
generating a sharp third image of the object (395) on the light receiver (120) at a third focus setting of the objective lens (110), wherein the third focus setting is associated with a third depth of field range, the third depth of field range being different from both the second depth of field range and the first depth of field range, and wherein
according to a first alternative, all depth of field ranges spatially overlap in the overlap region, or
according to a second alternative, the third depth of field range and the second depth of field range spatially overlap in a further overlapping region, the method further comprising
calculating, based on the second focus setting and the third focus setting, (a) a further first distance between the sensor system and a further near end, with respect to the sensor system, of the further overlap region, and (b) a further second distance between the sensor system and a further far end, with respect to the sensor system, of the further overlap region; wherein the distance is further determined based on the further first distance and the further second distance.

3. The method according to any one of the preceding claims, wherein
(B1) the focus setting of the objective lens (110) is continuously varied and a plurality of images of the object (395) are generated on the light receiver (120) at different focus settings each having a different depth of field range, wherein at least two of the images and the respective associated focus settings and depth of field ranges (T2, T3) are used to calculate the distance (O); and/or wherein
(B2) the first sharp image and/or the second sharp image are generated in a spectral wavelength range comprising visible light and/or infrared light.

4. The method according to any one of the preceding claims, wherein
the object (395) comprises optically detectable structures (841) for contrast enhancement, on the basis of which it is judged whether an image captured by the light receiver (120) is sharp and thus usable as a first image or as a second image, respectively;
wherein in particular the method further comprises projecting the optically detectable structures (841) onto the object (395).

5. The method according to any one of the preceding claims, further comprising
recognizing the object (395) in the first sharp image and/or in the second sharp image;
comparing the detected object with at least one comparison object stored in a database (460); and,
if the object (395) matches a comparison object within predetermined allowable deviations, identifying the object (395) as an object allowed for a particular action.

6. A method for optically determining a plurality of distances between (i) a sensor system (100) comprising a light receiver (120) and an objective lens (110), and (ii) one object (395) at a time from a plurality of objects located in a scene, the method comprising
performing the method according to any one of the preceding claims 1 to 5 for each of the plurality of objects, wherein the light receiver (120) comprises a plurality of light sensitive sub-regions and each one of the plurality of objects is focused on a sub-region of the plurality of light sensitive sub-regions and the associated depth of field ranges are used for determining the respective distance.

7. A sensor system (100) for determining a distance (O) between the sensor system (100) and an object (395) located in a scene (490), the sensor system (100) comprising
a light receiver (120);
an objective lens (110) for imaging the object (395) on the light receiver (120), wherein
in a first focus setting, to which a first depth of field range (T2) is assigned, a first sharp image of the object (395) is producible on the light receiver (120), and
in a second focus setting, to which a second depth-of-field range (T3) is assigned, a second sharp image of the object (395) can be generated on the light receiver (120), the second depth-of-field range (T3) and the first depth-of-field range (T2) being different and the two depth-of-field ranges (T2, T3) spatially overlapping in an overlap region (L23);
a data processing device (450) which is connected downstream of the light receiver (120), and which is configured
to calculate, based on the first focus setting and the second focus setting
(i) a first distance (U1) between the sensor system (100) and an end of the overlap region (L23) that is close with respect to the sensor system (100); and
(ii) a second distance (U2) between the sensor system (100) and an end of the overlap region (L23) remote with respect to the sensor system (100); and
to determine the distance (O) based on the first distance (U1) and the second distance (U2), wherein the distance (O) is between the first distance (U1) and the second distance (U2);
**characterized by**
a sharpness evaluation unit (422) which is connected downstream of the light receiver (120) and which is configured to evaluate the first image with a first sharpness evaluation factor and to evaluate the second image with a second sharpness evaluation factor and to transfer the two sharpness evaluation factors to the data processing device (450), wherein the data processing device (450) is configured to determine the distance (O) further based on the first sharpness evaluation factor and on the second sharpness evaluation factor.

8. The sensor system (300) according to claim 7, wherein
(C1) the light receiver (120) comprises a first partial light receiver (320a) and a second partial light receiver (320b) and the objective lens (120) comprises a first partial objective lens (310a) and a second partial objective lens (310b), wherein
the sharp first image is sharply imaged with the first partial objective (310a) onto the first partial light receiver (320a), and
the sharp second image being sharply imaged with the second partial objective lens (310b) onto the second partial light receiver (320b); and/or wherein
(C2) the light receiver (120) is a single light receiver and the objective lens (110) is a single lens.

9. The sensor system (400) according to any one of claims 7 to 8, further comprising
a sharpness evaluation unit (422), which is connected downstream of the light receiver (120) and which is configured to evaluate the first image with a first sharpness evaluation factor and to evaluate the second image with a second sharpness evaluation factor and to transfer the two sharpness evaluation factors to the data processing device (450), wherein the data processing device (450) is configured to determine the distance (O) further based on the first sharpness evaluation factor and on the second first sharpness evaluation factor;
wherein in particular the sensor system (400) comprises at least one of the following features:
(D1) the sensor system (400) further comprises a sharpness display device (424) which is connected downstream of the sharpness evaluation unit (422) and/or the data processing device (450) and which is configured to display the first sharpness evaluation factor and/or the second sharpness evaluation factor and/or a value derived from the two sharpness evaluation factors;
(D2) the data processing device (450) is configured to detect optical environmental conditions from the object (395) that at least make it difficult or impossible to obtain a sharp image of the object (395) on the light receiver (120).

10. The sensor system (100) according to any one of claims 7 to 9, wherein
the sensor system (400) further comprises at least one of the following features:
(E1) the objective lens (110) is a telecentric lens and/or the objective lens (110) has electrically adjustable optical elements;
(E2) the sensor system (400) further comprises a light receiver control device (426) coupled to the light receiver (120, 520a, 520b), wherein the light receiver control device (426) and the light receiver (120) are configured such that in a modified operation of the sensor system (400) at least two pixels (521a) of a plurality of pixels (521a) of the light receiver (520b) are combined into one superordinate pixel (521b).

11. The sensor system (400) according to any one of claims 7 to 10, further comprising
an illumination device (440) for illuminating the scene (490) with an illumination light (441).

12. The sensor system (400) according to the preceding claim, further comprising at least one of the following features.
(F1) an illumination light control device (442) coupled to the illumination device (440), the illumination light control device (442) being configured to control the illumination device (440) such that a characteristic of the illumination light (441) is changeable during an operation of the sensor system (400);
(F2) the characteristic of the illumination light (441) is determined by at least one of the following:
(a) wavelength;
(b) spectral intensity distribution;
(c) polarization direction; and
(d) intensity distribution for different polarization directions;
(F3) the characteristic of the illumination light (441) describes a dependence of the illumination intensity of the illumination light (441) on the solid angle of the scene (490) to be illuminated;
(F4) the illumination light control means (442) is coupled to the data processing device (450), and the illumination light control means (442) is configured to change the characteristic of the illumination light (441) based on an evaluation of the three-dimensional characteristic of the scene (490) by the data processing device (450).

13. The sensor system (400) according to any one of the preceding claims 7 to 12, wherein
the data processing device (450) is further configured such that an occlusion characteristic of an opening (484) to be passed by the object (395) is controllable by at least one occluding body (486).

14. A mobile device (998) comprising a sensor system according to any of the preceding claims 7 to 13.

15. A use of a sensor system (100) according to any of the preceding claims 7 to 14
as a proximity sensor and/or
for detecting and/or controlling traffic flows of objects (795a-e) moving through a scene (790) of the sensor system (100), wherein the scene (790) is determined by a spatial detection range of the sensor system (100).

## Revendications

1. Procédé de détermination optique d'un espacement (O) entre (i) un système de capteur (100) comprenant un récepteur de lumière (120) et un objectif (110) et (ii) un objet (395) lequel se trouve dans une scène (490), le procédé comprenant :
la génération d'une première image nette de l'objet (395) sur le récepteur de lumière (120) à une première mise au point de l'objectif (110), la première mise au point étant associée à une première zone de profondeur de champ (T2) ;
la génération d'une deuxième image nette de l'objet (395) sur le récepteur de lumière (120) à une deuxième mise au point, la deuxième mise au point étant associée une deuxième zone de profondeur de champ (T3) ; la deuxième zone de profondeur de champ (T3) et la première zone de profondeur de champ (T2) étant différentes et les deux zones de profondeur de champ (T2, T3) se chevauchant spatialement dans une zone de chevauchement (L23) ; et
le calcul, sur la base de la première mise au point et de la deuxième mise au point,
(a) d'une première distance (U1) entre le système de capteur (100) et une extrémité proche de la zone de chevauchement (L23) du système de capteur (100) et
(b) d'une seconde distance (U2) entre le système de capteur (100) et une extrémité éloignée de la zone de chevauchement (L23) du système de capteur (100) ; et
la détermination de l'espacement (O) sur la base de la première distance (U1) et de la seconde distance (U2), l'espacement déterminé (O) se situant entre la première distance (U1) et la seconde distance (U2) ;
**caractérisé en ce que**
le procédé comprend en outre l'évaluation de la première image nette avec un premier facteur d'évaluation de netteté et l'évaluation de la deuxième image nette avec un second facteur d'évaluation de netteté ;
dans lequel la détermination de l'espacement (O) est également basée sur le premier facteur d'évaluation de netteté et/ou sur le second facteur d'évaluation de netteté.

2. Procédé selon la revendication précédente, présentant au moins une des caractéristiques suivantes :
(A1) le procédé comprend également un calibrage de l'objectif (110) par rapport à la première mise au point, dans lequel
(a) un premier objet de référence agencé à un premier espacement prédéterminé du système de capteur (100) est reproduit sur le récepteur de lumière (120) lors de différentes premières mises au point de test ;
(b) pour chaque première mise au point de test, un degré de netteté de la reproduction est déterminé et
(c) la première mise au point de test est associée au degré de mise au point le plus élevé lorsque la première mise au point calibrée est utilisée ; et/ou le calibrage de l'objectif (110) par rapport à la deuxième mise au point, dans lequel
(a) un second objet de référence agencé à un second espacement prédéterminé du système de capteur (100) est reproduit sur le récepteur de lumière (120) lors de différentes deuxièmes mises au point de test ;
(b) pour chaque deuxième mise au point de test, un degré de netteté de la reproduction est déterminé, et
(c) la deuxième mise au point de test est associée au degré de netteté le plus élevé lorsque la deuxième mise au point calibrée est utilisée ;
(A2) le procédé comprend également la génération d'une troisième image nette de l'objet (395) sur le récepteur de lumière (120) lors d'une troisième mise au point de l'objectif (110), la troisième mise au point étant associée à une troisième zone de profondeur de champ et la troisième zone de profondeur de champ étant différente à la fois de la deuxième zone de profondeur de champ et de la première zone de profondeur de champ, et dans lequel
selon une première alternative, toutes les zones de profondeur de champ dans la zone de chevauchement se chevauchent spatialement, ou
selon une seconde alternative, la troisième zone de profondeur de champ et la deuxième zone de profondeur de champ se chevauchent spatialement dans une zone de chevauchement supplémentaire, le procédé comprenant en outre le calcul, sur la base de la deuxième mise au point et de la troisième mise au point, (a) d'une première distance supplémentaire entre le système de capteur et une extrémité proche supplémentaire de la zone de chevauchement supplémentaire par rapport au système de capteur et (b) d'une seconde distance supplémentaire entre le système de capteur et une extrémité éloignée supplémentaire de la zone de chevauchement supplémentaire par rapport au système de capteur ; l'espacement étant en outre déterminé sur la base de la première distance supplémentaire et de la seconde distance supplémentaire.

3. Procédé selon l'une quelconque des revendications précédentes, dans lequel
(B1) la mise au point de l'objectif (110) varie en continu et, avec différentes mises au point avec chacune une zone de profondeur de champ différente, une pluralité d'images de l'objet (395) sont générées sur le récepteur de lumière (120), au moins deux des images et les mises au point et les zones de profondeur de champ (T2, T3) respectives sont utilisés pour calculer l'espacement (O) ; et/ou
(B2) la première image nette et/ou la deuxième image nette sont générées dans une zone de longueurs d'onde spectrale qui comprend la lumière visible et/ou la lumière infrarouge.

4. Procédé selon l'une quelconque des revendications précédentes, dans lequel
l'objet (395) présente des structures visuellement reconnaissables (841) pour une augmentation du contraste, permettant d'évaluer si une image prise par le récepteur de lumière (120) est nette et peut donc être utilisée comme première image ou comme deuxième image ;
dans lequel, en particulier, le procédé comprend en outre la projection des structures visuellement reconnaissables (841) sur l'objet (395).

5. Procédé selon l'une quelconque des revendications précédentes, comprenant en outre
la reconnaissance de l'objet (395) dans la première image nette et/ou dans la deuxième image nette ;
la comparaison de l'objet détecté avec au moins un objet de comparaison stocké dans une base de données (460) ; et,
si l'objet (395) correspond à un objet de comparaison dans les limites des écarts admissibles prédéfinis, l'identification de l'objet (395) comme un objet autorisé pour une action spécifique.

6. Procédé de détermination optique d'une pluralité d'espacement entre (i) un système de capteur (100) comprenant un récepteur de lumière (120) et un objectif (110) et (ii) respectivement un objet (395) d'une pluralité d'objets qui sont situés dans une scène, le procédé comprenant
la mise en œuvre du procédé selon l'une quelconque des revendications précédentes 1 à 5 pour chacun de la pluralité d'objets, dans lequel le récepteur de lumière (120) présente une pluralité de zones partielles photosensibles et chacun de la pluralité d'objets est reproduit sur une zone partielle de la pluralité de zones partielles photosensibles et les zones de profondeur de champ associées sont utilisées pour déterminer l'espacement respectif.

7. Système de capteur (100) pour déterminer un espacement(O) entre le système de capteur (100) et un objet (395) qui se trouve dans une scène (490), le système de capteur (100) comprenant
un récepteur de lumière (120) ;
un objectif (110) pour reproduire l'objet (395) sur le récepteur de lumière (120), dans lequel
dans une première mise au point à laquelle est associée une première zone de profondeur de champ (T2), une première image nette de l'objet (395) peut être générée sur le récepteur de lumière (120), et
dans une deuxième mise au point, à laquelle une deuxième zone de profondeur de champ (T3) est associée, une deuxième image nette de l'objet (395) peut être générée sur le récepteur de lumière (120), la deuxième zone de profondeur de champ (T3) et la première zone de profondeur de champ (T2) étant différentes et les deux plages de profondeur de champ (T2, T3) se chevauchant spatialement dans une zone de chevauchement (L23) ;
un dispositif de traitement de données (450), qui est connecté en aval du récepteur de lumière (120) et qui est configuré,
pour calculer, sur la base de la première mise au point et de la deuxième mise au point
(i) une première distance (U1) entre le système de capteur (100) et une extrémité proche de la zone de chevauchement (L23) du système de capteur (100) et
(ii) une seconde distance (U2) entre le système de capteur (100) et une extrémité éloignée de la zone de chevauchement (L23) du système de capteur (100) ; et
pour déterminer l'espacement (O) sur la base de la première distance (U1) et de la seconde distance (U2), l'espacement (O) se situant entre la première distance (U1) et la seconde distance (U2) ; **caractérisé par**
une unité d'évaluation de netteté (422) qui est connectée en aval du récepteur de lumière (120) et qui est configurée pour évaluer la première image avec un premier facteur d'évaluation de netteté et pour évaluer la deuxième image avec un second facteur d'évaluation de netteté et pour transmettre les deux facteurs d'évaluation de netteté au dispositif de traitement de données (450), le dispositif de traitement de données (450) étant configuré pour déterminer l'espacement (O) en outre sur la base du premier facteur d'évaluation de netteté et du second facteur d'évaluation de netteté.

8. Système de capteur (300) selon la revendication 7, dans lequel
(C1) le récepteur de lumière (120) présente un premier récepteur de lumière partiel (320a) et un second récepteur de lumière partiel (320b) et l'objectif (120) présente un premier objectif partiel (310a) et un second objectif partiel (310b), dans lequel la première image nette est reproduite de manière nette à l'aide du premier objectif partiel (310a) sur le premier récepteur de lumière partiel (320a) et
la deuxième image nette est reproduite de manière nette à l'aide du second objectif partiel (310b) sur le second récepteur de lumière partiel (320b) ; et/ou
(C2) le récepteur de lumière (120) est un récepteur de lumière unique et l'objectif (110) est un objectif unique.

9. Système de capteur selon l'une quelconque des revendications 7 et 8, comprenant une unité d'évaluation de netteté (422) qui est connectée en aval du récepteur de lumière (120) et qui est configurée pour évaluer la première image avec un premier facteur d'évaluation de netteté et pour évaluer la deuxième image avec un second facteur d'évaluation de netteté et pour transmettre les deux facteurs d'évaluation de netteté au dispositif de traitement de données (450), le dispositif de traitement de données (450) étant configuré pour déterminer l'espacement (O) en outre sur la base du premier facteur d'évaluation de netteté et du second premier facteur d'évaluation de netteté ;
dans lequel, en particulier, le système de capteur (400) présente au moins l'une des caractéristiques suivantes :
(D1) le système de capteur (400) présente également un dispositif d'affichage de netteté (424) qui est monté en aval de l'unité d'évaluation de netteté (422) et/ou du dispositif de traitement de données (450) et qui est configuré pour afficher le premier facteur d'évaluation de netteté et/ou le second facteur d'évaluation de netteté et/ou une valeur dérivée des deux facteurs d'évaluation de netteté ;
(D2) le dispositif de traitement de données (450) est configuré pour détecter les conditions environnementales optiques de l'objet (395) qui rendent au moins difficile ou impossible une image nette de l'objet (395) sur le récepteur de lumière (120).

10. Système de capteur (100) selon l'une quelconque des revendications 7 à 9, dans lequel
le système de capteur (400) présente en outre au moins l'une des caractéristiques suivantes :
(E1) l'objectif (110) est un objectif télécentrique et/ou l'objectif (110) comporte des éléments optiques réglables électriquement ;
(E2) le système de capteur (400) présente en outre un dispositif de commande de récepteur de lumière (426) couplé au récepteur de lumière (120, 520a, 520b), le dispositif de commande de récepteur de lumière (426) et le récepteur de lumière (120) étant configurés de telle sorte que, dans un fonctionnement modifié du système de capteur (400), au moins deux pixels (521a) d'une pluralité de pixels (521a) du récepteur de lumière (520b) sont combinés en un pixel supérieur (521b).

11. Système de capteur (400) selon l'une quelconque des revendications 7 à 10, comprenant en outre un dispositif d'éclairage (440) pour éclairer la scène (490) avec une lumière d'éclairage (441).

12. Système de capteur (400) selon la revendication précédente, comprenant en outre au moins l'une des caractéristiques suivantes
(F1) un dispositif de commande de lumière d'éclairage (442) couplé au dispositif d'éclairage (440), qui est configuré pour commander le dispositif d'éclairage (440) de telle sorte qu'une caractéristique de la lumière d'éclairage (441) puisse être modifiée pendant le fonctionnement du système de capteur (400) ;
(F2) la caractéristique de la lumière d'éclairage (441) est déterminée par au moins l'une des caractéristiques suivantes :
(a) longueur d'onde ;
(b) répartition spectrale de l'intensité ;
(c) direction de polarisation et
(d) distribution d'intensité pour différentes directions de polarisation ;
(F3) la caractéristique de la lumière d'éclairage (441) décrit une dépendance de l'intensité d'éclairage de la lumière d'éclairage (441) par rapport à l'angle spatial de la scène à éclairer (490) ;
(F4) le dispositif de commande de lumière d'éclairage (442) est couplé au dispositif de traitement de données (450) et le dispositif de commande de lumière d'éclairage (442) est configuré, sur la base d'une évaluation de la caractéristique tridimensionnelle de la scène (490) par le dispositif de traitement de données (450), pour modifier la caractéristique de la lumière d'éclairage (441).

13. Système de capteur (400) selon l'une quelconque des revendications 7 à 12, dans lequel
le dispositif de traitement des données (450) est en outre configuré de telle sorte qu'une caractéristique de couverture d'une ouverture (484) devant être franchie par l'objet (395) peut être commandée par au moins un corps de fermeture (486).

14. Appareil mobile (998) avec un système de capteur selon l'une quelconque des revendications précédentes 7 à 13.

15. Utilisation d'un système de capteur (100) selon l'une quelconque des revendications précédentes 7 à 14 comme capteur de proximité et/ou
pour la détection et/ou la commande de flux de trafic d'objets (795a-e) se déplaçant à travers une scène (790) du système de capteur (100), la scène (790) étant déterminée par une zone de détection spatiale du système de capteur (100).
